(19) Europäisches Patentamt
European Patent Office
Office européen des brevets

(11) **EP 0 866 943 B1**

(12) **EUROPÄISCHE PATENTSCHRIFT**

(45) Veröffentlichungstag und Bekanntmachung des Hinweises auf die Patenterteilung:
**04.07.2001 Patentblatt 2001/27**

(51) Int Cl.7: **G01B 11/00**

(21) Anmeldenummer: **96944575.8**

(86) Internationale Anmeldenummer:
**PCT/EP96/05592**

(22) Anmeldetag: **13.12.1996**

(87) Internationale Veröffentlichungsnummer:
**WO 97/22849 (26.06.1997 Gazette 1997/27)**

(54) **VERFAHREN UND VORRICHTUNG ZUR HOCHAUFLÖSENDEN BESTIMMUNG VON ABSTÄNDEN IM FOKUSSIERTEN BILD EINES LINSEN-PUPILLEN-SYSTEMS**

PROCESS AND DEVICE FOR HIGH-DEFINITION MEASUREMENT OF INTERVALS IN THE FOCUSED IMAGE PRODUCED BY A LENS-APERTURE DIAPHRAGM SYSTEM

PROCEDE ET DISPOSITIF POUR UNE MESURE HAUTE-DEFINITION D'INTERVALLES DANS L'IMAGE FOCALISEE PRODUITE PAR UN SYSTEME A DIAPHRAGME D'OUVERTURE ET LENTILLES

(84) Benannte Vertragsstaaten:
**CH FR GB IT LI NL SE**

(30) Priorität: **15.12.1995 DE 19547036**
**29.12.1995 DE 19549074**

(43) Veröffentlichungstag der Anmeldung:
**30.09.1998 Patentblatt 1998/40**

(73) Patentinhaber:
• **FRAUNHOFER-GESELLSCHAFT ZUR FÖRDERUNG DER ANGEWANDTEN FORSCHUNG E.V.**
**80636 München (DE)**
• **Lauinger, Norbert**
**35578 Wetzlar (DE)**

(72) Erfinder:
• **LAUINGER, Norbert**
**D-35578 Wetzlar (DE)**

• **CARMESIN, Hans-Otto**
**D-28717 Bremen (DE)**
• **GÖRNITZ, Eckhard**
**D-14513 Teltow (DE)**
• **KUSCH, Sigurd**
**D-12526 Berlin (DE)**
• **PINNOW, Manfred**
**D-14513 Teltow (DE)**

(56) Entgegenhaltungen:
EP-A- 0 028 548     DE-A- 3 419 098
US-A- 4 458 979

• **1968 NEREM RECORD, 6. - 8.November 1968, BOSTON, MA, USA, Seiten 120-121, XP000196922 FRIESEM A.A. ET AL: "Holographic Data Storage in Thick Recording Media"**

**Beschreibung**

Die Erfindung bezieht sich auf ein Verfahren zur genauen Bestimmung von räumlichen und/oder zeitlichen Abständen im fokussierten Bild eines Linsen-Pupillen-Systems und/oder von räumlichen und/oder zeitlichen Objektparametern, wie z. B. Geschwindigkeit oder Tiefe, insbesondere zum Zweck der genauen und intelligenten Steuerung von Automaten. Die Erfindung bezieht sich auch auf eine entsprechende Vorrichtung zur teilweisen Durchführung des Verfahrens.

Bekannt sind als passive Verfahren geometrisch-optisch abbildende Kameras, die auf photographische Filme oder auf CCD-Arrays abbilden. Beide Verfahren liefern räumliche 3D-Information in flächiger 2D-Form in der Bildebene. Photographische Kameras sind zwar im Auflösungsvermögen lediglich durch optische Parameter und durch die Korngröße des Filmmaterials begrenzt, dafür aber nur speicherfähig und nicht hingegen zur Bildverarbeitung in Echtzeit geeignet. CCD-Kameras sind zwar fähig zu relativ rascher Bildverarbeitung, im Auflösungsvermögen dafür aber begrenzt durch die Pixelgröße der CCD-Arrays. Holographisch abbildende und aufzeichnende Einrichtungen sind zwar in der Lage, räumliche 3D-Information zu liefern und zu speichern; dies gelingt jedoch nur im kohärenten Licht. Auch wird bei der Bildaufnahme stets ein 2-Strahlverfahren (Objekt- und Referenzstrahl) benötigt. Und schließlich sind holographische Systeme nur bedingt zur Bildverarbeitung in Echtzeit geeignet. Stereokameras sind technisch noch aufwendiger und bedingen eine Verrechnung von mindestens 2 CCD-Arrays, um 3D-Informationen zu erhalten.

Auf dem Gebiet der optischen Sensorik wird in der gitteroptischen Ortsfrequenzfilterung der CORREVIT-/CORREFOT-Meßtechnik (CORREVIT ist eine Marke der CORRSYS GmbH Wetzlar) eine Signalvorverarbeitung im Hinblick auf Längen-, Geschwindigkeits- und Abstandsmessungen bei relativ zum Sensor bewegten Objekten (Straße, industrielle Bandgüter u. a.) dadurch realisiert, daß Gitter zwischen eine geometrische Abbildungsoptik und nachgelagerte Photodioden in den optischen Strahlengang als Signalmodulatoren eingelagert werden, wie dies u. a. in der DE-A-21 44 487 und der DE-AS 2156617 beschrieben ist Dabei werden Gitter aber lediglich als 1D-/2D-Strahlteiler, nicht jedoch als diffraktive 1D-/2D-/3D-Gitter verwendet..

Im Institut für Optosensorik Dr. Lauinger/Wetzlar wurden theoretische Modellrechnungen, die auf der Grundlage eines 3D-Gitters beruhen, zur "invertierten Retina des menschlichen Auges" durchgeführt und mit aus dem menschlichen Sehen bekannten subjektiven Phänomenen (Apertureffekte, sog. Stiles-Crawford-Effekte I und II, Bezold-Brücke-Phänomen u.a.) in Beziehung gesehen (Lauinger, N., A new interpretation of the Stiles-Crawford Effects in Human Vision. Journal of Biological Physics 19: 167-188, 1994; Lauinger, N., The relationship between brightness, hue and saturation when the inverted human retina is interpreted as a cellular diffractive 3D chip. SPIE Proceedings Vol. 2588, October 1995, 208-232). Modellhaft wurden Teilaspekte 4D-gitteroptisch berechnet (Carbon, M., Using diffraction theory of human vision for design of color vision devices, SPIE Proceedings Vol. 2353, 1994, 550-560; N. Lauinger, Inverted retina of the human eye; a trichromatic 4D space-time optical correlator, SPIE Proceedings, Vol. 2904, 1996, 344-360). Effekte eines diffraktiven 3D-Gitters wurden für die Inkohärenz-Kohärenz-Wandlung optischer Strahlung beschrieben, wie dies aus der DE-A-37 40 533 bekannt ist.

Trotz umfangreicher Bemühungen, besonders im Hinblick auf Automatisierung und Robotik, gibt es bisher keine technische hochauflösende robuste und echtzeitfähige 3D-Bewegungsbestimmung auf der Grundlage berührungsloser Sensordatenerhebung. Die zentrale Bedeutung von optischen Flußfeldern für die visuelle Bewegungsbestimmung ist aus der DE-Cl-195 09 277 (veröffentlicht 20.6.96) bekannt, ebenso aus Structure from Motion by Linear Transformations, Proc. Workshop "Kognitive Robotik", B. Krieg-Brückner, Ch. Herwig Edts., ZKW-Bericht 3/95, Zentrum für Kognitionswissenschaften Universität Bremen, März 1995. Die wesentlichen Leistungsmerkmale neuronaler Netzwerke sind Parallelität und Adaptivität (Carmesin, H.O., Theorie neuronaler Adaption, Köster, Berlin 1994; Carmesin, H.-O. Neurophysics of adaption. Physics Essays 8(1), 38-51, 1995). Obwohl neuronale Netzwerke sich für selbstjustierende hochauflösende Bildverarbeitung besonders eignen, wurde die neuronale Adaptionstheorie bisher weder auf Bewegungsbestimmung noch auf die Auswertung von Beugungsreflexsequenzen in bildgebenden Sensoren angewendet.

Dieselbe Problematik liegt auch außerhalb des sichtbaren Wellenlängenspektrums vor.

Der Erfindung liegt die Aufgabe zugrunde, ein Verfahren sowie eine Vorrichtung der eingangs genannten Art zur Verfügung zu stellen, mit welchen praktisch in Echtzeit eine genaue Bestimmung von räumlichen und/oder zeitlichen Abständen in fokussierten Bildfolgen eines Linsen-Pupillen-Systems und/oder von räumlichen und/oder zeitlichen Objektparametern, wie z. B. Geschwindigkeit oder Tiefe, ermöglicht wird.

Verfahrensmäßig wird diese Aufgabe durch die Merkmale des Anspruchs 1 gelöst.

Vorteilhafte Ausgestaltungen des Verfahrens finden sich in den Unteransprüchen 2 bis 18.

Vorrichtungsmäßig wird die Aufgabe gelöst durch die Merkmale des Anspruchs 19.

Vorteilhafte Ausführungsbeispiele der erfindungsgemäßen Vorrichtung finden sich in den, abhängigen Ansprüchen 20-28.

Der Erfindung liegt die überraschende Erkenntnis zugrunde, daß die in der Bildebene mit der Längenauflösung etwa der Lichtwellenlänge fokussierbaren elektromagnetischen Strahlen sich etwa mit der Genauigkeit der Lichtwellenlänge ortsspezifisch durch eine 3D-Modulationseinrichtung modulieren lassen. Die so modulierten elektromagnetischen Strahlen können später in einer Detektoreinrichtung mit geringerer Längenauflösung erfaßt werden, und die orte in der Bildebene können anhand der ortsspezifischen Modulierung berechnet werden. Dadurch kann die 3D-Struktur des Lichtfeldes und somit die 3D-Struktur von Objekten mit hoher Genauigkeit erfaßt werden. Beispielsweise nehmen an einem Gitter gebeugte elektromagnetische Strahlen entsprechend der Reflexions-Bedingung eine durch die Kristallorientierung bestimmte Richtung und eine der Bragg-Bedingung entsprechende Wellenlänge an.

Die mit der Erfindung erzielten Vorteile werden hier beispielhaft für das sichtbare Wellenlängenspektrum in den folgenden Punkten dargelegt:

(1) Derzeit ist die Genauigkeit der Bestimmung von Abständen einer Helligkeitsverteilung in einer Fokusebene durch die Abmessung der Pixel eines bildgebenden Sensors bestimmt, diese betragen etwa 20 Mikrometer. Bei Anwendung einer besonderen Ausführungsform der erfindungsgemäßen Vorrichtung, d.h. mit einer 3D-Modulationseinrichtung in Form eines 3D-Beugungsgitters, ist diese Genauigkeit
durch die Wellenlänge des Lichtes und den Gitterabstand begrenzt. Diese betragen bei Wahl eines optimalen Gitters 0.4 Mikrometer. Daher ist diese Längenauflösung um den Faktor 50, die entsprechende Flächenauflösung um den Faktor 2500 steigerbar.

Eine solche Steigerung der Genauigkeit ist wichtig, da das menschliche Auge in der Retina über $10^8$ Rezeptoren mit einem entsprechenden Längenauflösungsvermögen von jeweils etwa 1 Mikrometer verfügt, da entsprechend kulturell entstandene Umwelten in Haushalt, Freizeit, Verkehr und Arbeitswelt auf visuelle Systeme wie die des Menschen ausgelegt sind, und da somit zukünftige intelligente mobile Automaten und Roboter vergleichbare visuelle Systeme benötigen, um sicher, zuverlässig und ökonomisch betreibbar zu sein.

(2) Durch das erfindungsgemäße Verfahren können räumliche und/oder zeitliche Objektparameter, wie etwa Geschwindigkeiten oder Tiefen, schnell und mit geringem Aufwand korrelatoroptisch ausgewertet werden.

(3) Durch das erfindungsgemäße Verfahren können für jeweilige Anwendungen für entsprechende spezifische optische Vorrichtungen und deren Abmessungen universell Algorithmen in Form lernender neuronaler Netzwerke an vorgesehener geeigneter Stelle angewendet werden, ohne daß ein neuer Algorithmus zu entwickeln wäre. Hierdurch werden üblicherweise auftretende, wesentliche Entwicklungskosten von vornherein vermieden.

(4) Die Beugungstheorie ist für den Grenzfall großer Distanz vom Gitter (Fernfeld) sehr weit entwickelt; sie findet umfangreiche Anwendung in der Optik und der Materialforschung. Dagegen ist die Physik für den Bereich des Nahfeldes relativ kompliziert, und anwendungsspezifisch; entsprechend ist die Theorie noch mehr entwicklungsfähig, es sind bisher keine Anwendungen in Bezug auf Bewegungsbestimmung bekannt, wogegen die hier verwendeten lernfähigen neuronalen Netzwerke durch ihre Flexibilität anwendbar und besonders adäquat sind. Dabei ist generell die zentrale Bedeutung von Flußfeldern bei der Bewegungsbestimmung bereits seit Helmholtz bekannt, ferner gilt bei Entfernungen ab fünf Metern die Bewegungsbestimmung aus Flußfeldern als vorteilhaft gegenüber der Bewegungsbestimmung durch Binokularität, ganz allgemein bietet die visuelle Bestimmung von räumlichen und/oder zeitlichen Objektparametern gegenüber anderen Modalitäten den Vorteil hoher Auflösung, hoher Reichweite, hoher Geschwindigkeit und natürlicher strahlungsquellen.

(5) Ein Lichtfeld beinhaltet generell sowohl Amplituden- als auch Phaseninformation. Bei den meisten technischen visuellen Systemen wird nur die Amplitudeninformation verwendet, dagegen kann bei dem erfindungsgemäßen Verfahren mit Hilfe der 3D-Beugungsgitter auch die enthaltene 3D- Phaseninformation genutzt werden, und zwar selbst bei Verwendung von inkohärentem Licht, wie es etwa von natürlichen Strahlungsquellen ausgesendet wird. Bei natürlichen visuellen Systemen findet eine vorteilhafte Auswertung von Phaseninformation vermutlich beim menschlichen Auge mit Hilfe des 3D-Beugungsgitters der invertierten Retina statt.

(6) Die neuronalen Netzwerke haben in den letzten Jahrzehnten eine rasante Entwicklung erlebt. Die wesentlichen Vorteile sind Parallelität und Adaptivität. Dadurch sind neuronale Netzwerke besonders geeignet zur selbstjustierenden und hochauflösenden Bildverarbeitung in Echtzeit, auch bei komplexen Auswertungen. Hier steht die technische Entwicklung bisher noch weit hinter dem natürlichen Vorbild zurück. Gemäß einer besonderen Ausführungsform des erfindungsgemäßen Verfahrens ist es möglich, die neuronalen Netzwerke an einer Stelle einzusetzen, an der sie ihre volle Leistungsfähigkeit auch entfalten können, bei der parallelen hochauflösenden Rekonstruktion von Objektparametern aus reichhaltigen, möglichst modulierten und bewegten Beugungsmustern.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Fig. 1     ein geometrisch/optische abbildendes Linsen-Pupillensystem mit einem 3D-Gitter in der Bildebene,

Fig. 2     schematisch eine mögliche Ausführungsform einer erfindungsgemäßen Vorrichtung,

Fig. 3     eine konkrete Ausführungsform der erfindungsgemäßen Vorrichtung,

Fig. 4     schematisch die Abbildungs- und Auflösungssituation für eine konkrete Ausführungsform der erfindungsgemäßen Vorrichtung,

Fig. 5a     eine weitere Ausführungsform der erfindungsgemäßen Vorrichtung,

Fig. 5b     einen Ausschnitt von Fig. 5a,

Fig. 6     ein Ausführungsbeispiel einer Fourier-Transformation eines Musters,

Fig. 7     die Fourier-Transformation mit Hilfe eines volumenholographischen optischen Elements,

Fig. 8     die Fouriertransformierte einer Balkenstruktur erzeugt mit Hilfe des optischen volumenholographischen Elements gemäß Figuren 7 und 8,

Fig. 9     die Situation bei Verwendung eines gekrümmten 3D-Beugungsgitters gemäß einer weiteren Ausführungsform der erfindungsgemäßen Vorrichtung,

Fig. 10     schematisch die Situation bei Durchführung einer Lernphase gemäß einer Ausführungsform des erfindungsgemäßen Verfahrens,

Fig. 11     ein Ausführungsbeispiel zur Bestimmung einer Tiefenkarte mittels 3D-Talbot-Effekt,

Fig. 12     die Ausbildung des 3D-Beugungsgitters mit Detektorelementen zusätzlich der Darstellung gemäß Figur 11,

Fig. 13, 14     die Intensitätsverleitungen bei vor dem Fokus befindlichen Bragg-Gitter,

Fig. 15     die Superposition der Intensitätsverteilungen bei sich hinter dem Fokus befindlichem Bragg-Gitter,

Fig. 16     die Ausbildung des 3D-Beugungsgitters mit Detektorelementen zusätzlich der Darstellung gemäß Figur 11, jedoch bei Benutzung von weißem Licht und außeraxialen Position des leuchtenden Elementes,

Fig. 17, 18     die Intensitätsverteilung bei vor dem Fokus befindlichem Bragg-Gitter gemäß Figur 16,

Fig. 19, 20     die Intensitätsverteilungen bei sich hinter dem Fokus befindlichen Bragg-Gitter und

Fig. 21     eine Anordnung zum 3D-Talbot-Effekt.

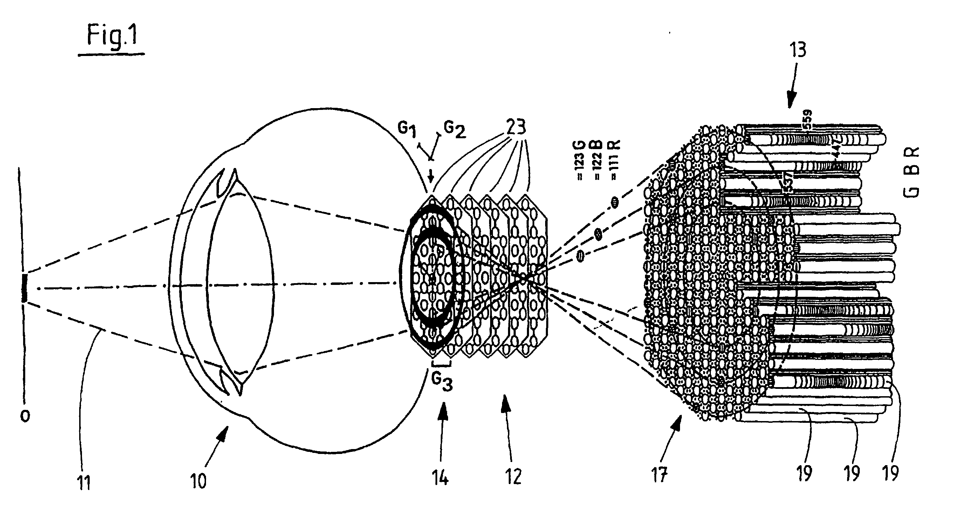

Das geometrisch optisch abbildende Linsen-Pupillen-System 10 gemäß Figur 1 bildet ein Objekt O in die Bildebene 14 des Linsen-Pupillen-Systems 10 ab. In der Bildebene 14 ist ein 3D-Gitter 12 eingelagert mit den Gitterkonstanten $g_1$, $g_2$ und $g_3$ in x-, y- und z-Richtung. Dieses Gitter 12 transformiert die Abbildung oder das Bild des Objekts O in die Talbotebene im Nahfeld hinter dem Gitter 12. Dort liegen die Interferenzmaxima auf konzentrischen Kreisen, um von geeigneten Detektorelementen 19 bzw. Fotorezeptoren einer Detektoreinrichtung 13 weiterverarbeitet zu werden. Die dabei auf drei Kreisen resultierenden chromatischen Interferenzmaxima entsprechen im Beispiel dem roten (R), grünen (G) und blauen (B) Farbkanal des menschlichen Sehens mit einer Wellenlänge von jeweils $\lambda_{max}$ = 559, 537, 447. In Figur 1 sind mit "BO" Beugungsordnungen bezeichnet, die numeriert sind 111 für rot (R), 122 für blau (B), 123 für grün (G).

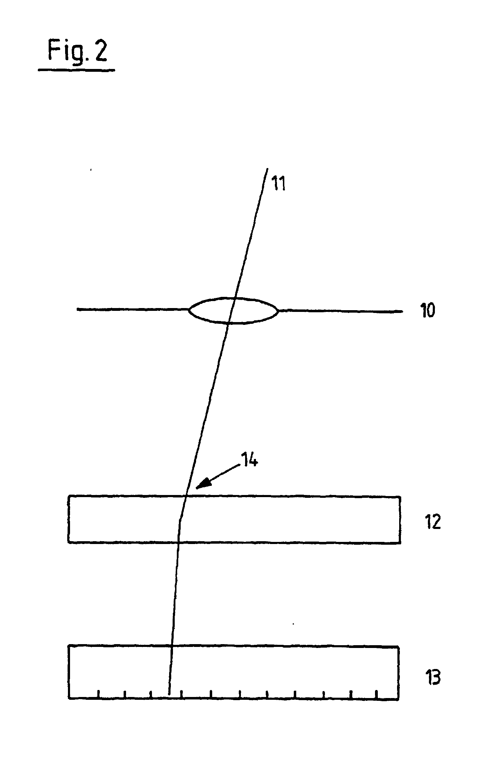

Fig. 2 zeigt schematisch eine Vorrichtung gemäß der vorliegenden Erfindung. Diese umfaßt ein Linsen-Pupillen-System 10, das das einfallende Licht (hier symbolisiert durch einen Lichtstrahl 11) fokussiert und eine 3D-Modulationseinrichtung 12 zur ortsspezifischen Modulation der Lichtstrahlen, die sich im Bereich der Fokusebene des Linsen-Pupillen-Systems 10 und vor einer dahinter befindlichen Detektoreinrichtung 13 befindet. Der Lichtstrahl 11 trifft auf Netzebenen am Ort 14 (Ursprungsort) in der 3D-Modulationseinrichtung 12 auf und wird entsprechend der Bragg-Bedingung hinsichtlich seiner Ausbreitungsrichtung und seiner Chromatik (Wellenlänge) moduliert.

Zum Beispiel beschreibt die bekannte v. Laue-Gleichung für 3D-Gitter die konstruktive Interferenz in einer Beugungsordnungsrichtung mittels der Bedingungen:

$$g_1 (\cos \alpha - \cos \alpha_0) = h_1 \lambda$$

$$g_2 (\cos \beta - \cos \beta_0) = h_2 \lambda$$

$$g_3 (\cos \gamma - \cos \gamma_0) = h_3 \lambda$$

Dabei sind:

| | |
|---|---|
| $g_1$, $g_2$ und $g_3$ | Gitterkonstanten in x-, y-, z-Richtung |
| $\alpha_0$, $\beta_0$, $\gamma_0$ | Einfallsapertur der Lichtkegel, |
| $\alpha$, $\beta$, $\gamma$ | Ausfallswinkel der Beugungsordnung, |
| $h_1$, $h_2$, $h_3$ | ganzzahlige Beugungsordnungstripel, |
| $\lambda$ | Wellenlänge. |

Bei Auflösung der drei Gleichungen nach $\lambda$ für ein 3D-Würfel-Gitterelement ($g_1$, $g_2$ und $g_3 = g$) ergibt sich:

$$\lambda = \frac{2 h_3 g}{h_1^2 + h_2^2 + h_3^2}$$

Bei g = 0,75 μm ergibt sich bei senkrecht einfallendem Licht ($\alpha_0 = \beta_0 = 90°$, $\gamma_0 = 0°$) in der 111-Beugungsordnungsrichtung die Wellenlänge $\lambda$ = 500 nm.

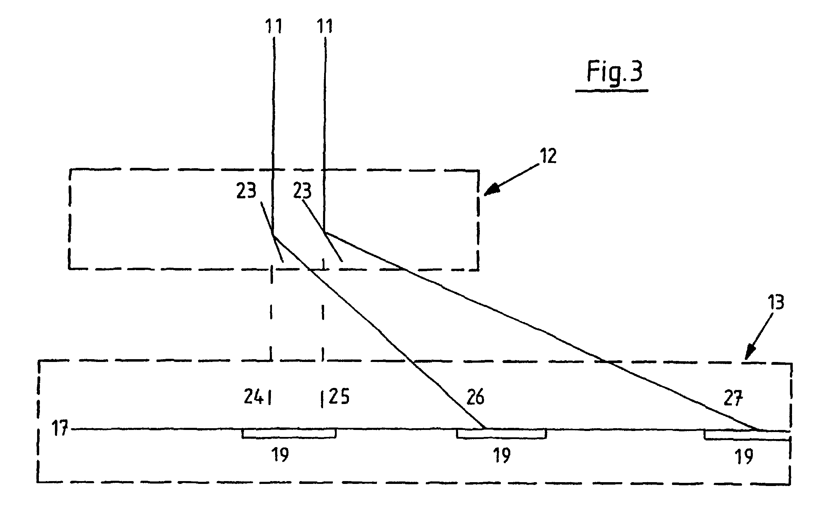

Fig. 3 zeigt eine konkrete Ausführungsform der erfindungsgemäßen Vorrichtung. Eine 3D-Modulationseinrichtung 12 liegt in Form einer Einrichtung zur ortsspezifischen Umlenkung 22 mit Umlenkelementen 23 in Form von Netzebenen vor, von denen nur zwei dargestellt sind.

Der Lichtstrahl 11 trifft auf zwei Netzebenen 23 in der 3D-Modulationseinrichtung 12 auf und wird entsprechend der Bragg-Bedingung hinsichtlich seiner Ausbreitungsrichtung und seiner Chromatik (Wellenlänge) auf zwei Detektorelemente 19 gelenkt. Zum Beispiel resultiert laut der v. Laue-Gleichung bei einem 3D-Würfel-Gitterelement mit zwei Netzebenen

$$\lambda = \frac{2 h_3 g}{h_1^2 + h_2^2 + h_3^2}$$

für einen senkrecht einfallenden weißen Lichtstrahl in der 111-Beugungsordnungsrichtung die Wellenlänge $\lambda$ = 500 nm, in der 113-Beugungsordnungsrichtung die Wellenlänge $\lambda$ = 409 nm in Transmission oder Reflexion.

Eine weitere Ausführungsform, bei der die 3D-Modulationseinrichtung 12 ein den spektralen Helligkeitsempfindlichkeitskurven im menschlichen Tagessehen entsprechendes trichromatisches Signal im RGB-Farbenraum (RGB = Rot Grün Blau) liefert, ergibt sich, wenn ein hexagonales 3D-Gitterelement als 3D-Modulationseinrichtung Verwendung findet. Zum Beispiel ergibt die v. Laue-Gleichung mit einem hexagonalen 3D-Gitterelement (hexagonale Dichtestpackung kugelförmiger Gitterelemente im kartesischen Koordinatensystem) laut Gleichung:

$$\lambda = \frac{2 h_3}{g_3 \left( \dfrac{h_1^2}{g_1^2} + \dfrac{h_2^2}{g_2^2} + \dfrac{h_3^2}{g_3^2} \right)}$$

Bei senkrecht einfallendem Lichtstrahl 11 und Gitterkonstantenwerten von $g_1 = 2\lambda$, $g_2 = 4\lambda/\sqrt{3}$, $g_3 = 4\lambda$ und $\lambda$ = 559 nm in den $h_1 h_2 h_3$-Beugungsordnungen 111 (Rot), 123 (Grün) und 122 (Blau) das Wellenlängentripel 559/537/447 nm, das der maximalen spektralen Hellempfindlichkeit der Photopigmente in den Zapfen der menschlichen Retina entspricht. Dieses gitteroptische Ergebnis ist beispielhaft in Figur 1 dargestellt. Bei reduzierter Gitterebenenzahl in der 3D-Modulationseinrichtung resultiert dabei eine spektrale Gauß'sche Bandpaßcharakteristik um diese 3 $\lambda_{max}$, an Lageorten der Interferenzmaxima in einer Betrachtungsebene hinter dem 3D-Gitter, die als Schnittstellen von drei unter 60° kreuzenden Hyperbelscharen und konzentrischen Kreisen definiert sind. In Figur 1 ist die Gauß'sche Bandpaßcharakteristik für die 3 $\lambda_{max}$ (grün, blau, rot) durch die Dichte der Schraffur in den Lichtleitern 19 angedeutet.

In einer anderen Ausführungsform kann auch vorgesehen sein, daß als Umlenkelemente 23 halbdurchlässige Mikrospiegel verwendet werden, welche die durchgelassenen Lichtstrahlen 24 und 25 zudem rot einfärben. Zu jedem roten lokalen Helligkeitsmaximum in einem Detektorelement 19 bestimmt man das zugehörige lokale Helligkeitsmaximum der nicht roten, also reflektierten Lichtstrahlen 26 und 27 mit erhöter Genauigkeit. Aus deren Position in der Detektoranordnung 17 bestimmt man den Ursprungsort in der 3D-Modulationseinrichtung 12.

Weiterhin kann als Beispiel für zeitliche Abstände in fokussierten Bildfolgen vorgesehen sein, daß zu jedem roten lokalen Helligkeitsmaximum in einem Detektorelement 19 das zugehörige lokale Helligkeitsmaximum zum nachfolgenden Zeitpunkt und daraus die Geschwindigkeit des lokalen Helligkeitsmaximums bestimmt wird. Aus dieser Geschwindigkeit schätzt man die erhöhte Geschwindigkeit der umgelenkten Lichtstrahlen. Man stellt einen Hochpaßfilter entsprechend ein und erfaßt so die umgelenkten Lichtstrahlen 26 und 27 mit erhöter Genauigkeit. Aus deren Position in der Detektoranordnung 17 bestimmt man dann den Ursprungsort in der 3D-Modulationseinrichtung 12.

Mittels der vorliegenden Erfindung läßt sich eine Steigerung der Genauigkeit durch Bitvervielfachung per Modulation erreichen, wie im folgenden theoretisch gezeigt wird: Ein Lichtstrahl, der ohne 3D-Modulationseinrichtung nur in hell/dunkel zur Bestimmung von räumlichen und zeitlichen Abständen und Objektparametern beiträgt, trägt im Rahmen der Informationstheorie mit einem Bit bei. Durch die Modulation der drei Farben Rot, Grün und Blau mit jeweils einem zusätzlichen Bit ist die Zahl der Bits um drei gesteigert. Bei einer Verrechnung, welche diese Bits auch in den bestimmten räumlichen und zeitlichen Abständen und Objektparametern wiedergibt, erhält man eine Steigerung der Genauigkeit um drei Bits, d. h. fast um eine Dezimalstelle. Dieser Zusammenhang soll an einem konkreten Ausführungsbeispiel veranschaulicht werden.

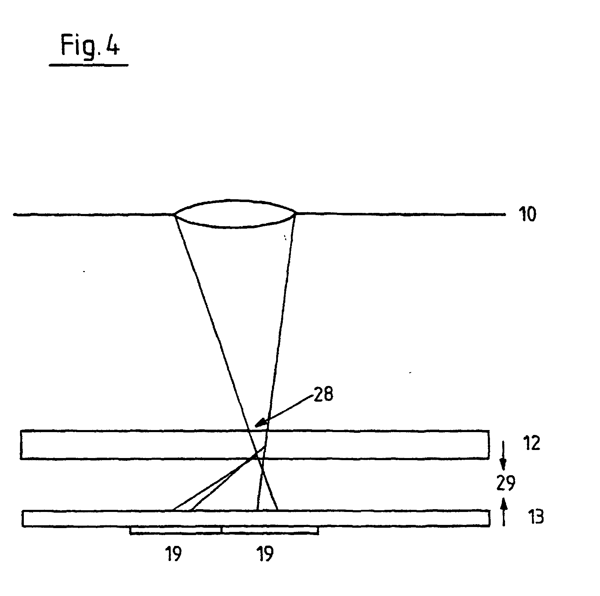

Die in Fig. 4 gezeigte erfindungsgemäße Vorrichtung weist die folgenden Parameter auf:
Das Linsen-Pupillen-System 10 besitzt bei Verwendung einer Umlenkeinrichtung 12 bei dem hier gewählten Ausführungsbeispiel eine Brennweite von 17 mm und Blendendurchmesser von 4 mm. Hieraus resultiert ein Aperturkegel-Öffnungswinkel von 6,7° und Airy-Disk-Durchmesser 28 von ca. 5 µm. Die Distanz 29 zwischen der 3D-Modulationseinrichtung 12 und der Detektoreinrichtung 13 beträgt 20 µm. Die seitliche Ablenkung der umgelenkten Strahlen auf der Detektoreinrichtung 13 beträgt 20 µm. Für die Größe eines Detektorelementes 19 sei 20 µm angenommen.

Dies führt zu einer Verdopplung der Anzahl der erreichten Detektorelemente 19 in der Länge sowie zu einer Vervierfachung der Anzahl der erreichten Detektorelemente 19 in der Ebene und damit zu einer Vervierfachung der Bitzahl. Bei Kenntnis der relevanten technischen Daten einer konkreten Anwendung ist also eine deutliche Verbesserung der Abmessungen zu erwarten.

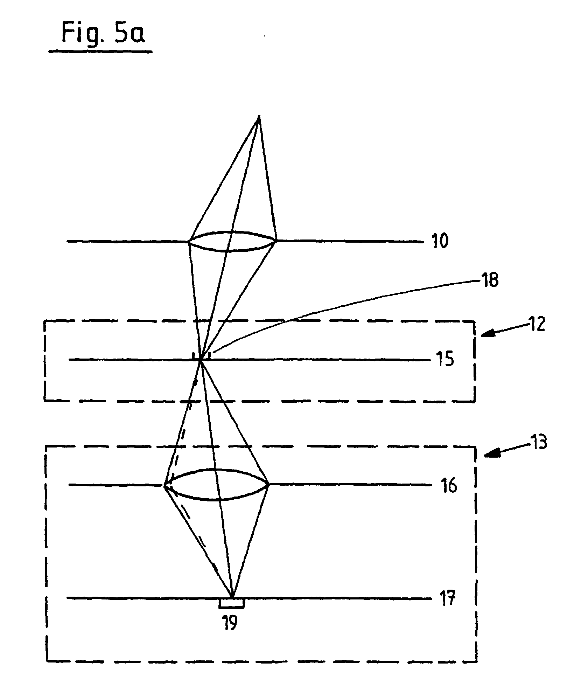

Fig. 5a zeigt eine weitere Ausführungsform der Vorrichtung gemäß der vorliegenden Erfindung. Hinter einem Linsen-Pupillen-System 10 befindet sich in der Fokusebene eine 3D-Modulationseinrichtung 12 mit einem Modulationsfilter 15, bestehend aus Filterelementen 18. Eine wiederum hinter der 3D-Modulationseinrichtung 12 angeordnete Detektoreinrichtung 13 umfaßt ein zweites Linsen-Pupillen-System 16 zur Fokussierung der modulierten Lichtstrahlen sowie eine bildgebende Detektoranordnung 17 von Detektorelementen 19.

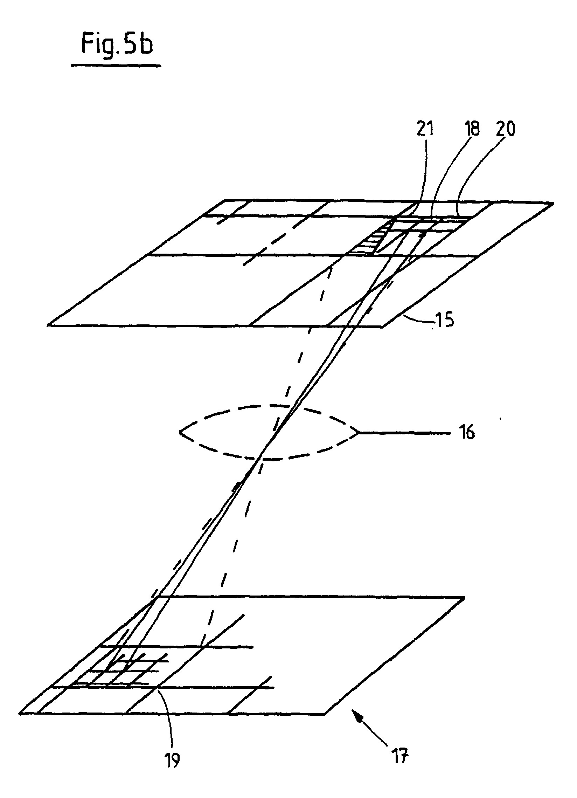

Fig. 5b zeigt ausschnitthaft die Vorrichtung von Fig. 5a. Der Modulationsfilter 15 in der Fokusebene des Linsen-Pupillen-Systems 10 gemäß Figur 5b umfaßt ortsspezifische Filterelemente 18, z.B. in Form einer random dot-Verteilung. Die modulierten Lichtstrahlen werden durch die bildgebende Detektoranordnung 17 von Detektorelementen 19 gemessen. Das Ausführungsbeispiel ist im Prinzip prototypisch für alle Modulationen von Bildelementen durch die 3D-Modulationseinrichtung 12. Die Berechnung der genauen Position eines Kantenelements 21 im Strahlengang unmittelbar vor der 3D-Modulationseinrichtung 12 wird wie folgt vorgenommen:

Die Helligkeit $H_i$ an einem Filterelement 18 sei null an dem Kantenelement 21 und ändere sich an den übrigen Filterelementen mit Koordinaten $x_i$ und $y_i$ des Urbildes 20 eines Detektorelementes 19 wie folgt

$$H_i = y_i\text{-}mx_i\text{-}b. \qquad (1)$$

Dabei ist mx die Steigerung b der Achsenabschnitt des Kantenelements 21.

Die Filterelemente 18 seien entweder durchlässig, $F_1 = 1$, oder undurchlässig für die x-Polarisationsrichtung, $F_1 = 0$. Die Filterelemente $F_1$ seien randomisiert gewählt. In der Detektoreinrichtung 13 wird sowohl die Helligkeit $H_j = S_{ielj} H_i$ als auch die Helligkeit $H_j^p = S_{ielj} F_i H_i$ hinter einem Polarisationsfilter (nicht gezeigt), der für die y-Richtung undurchlässig ist, gemessen. Durch Einsetzen von Gl. (1) erhält man

$$H_j = \sum_{i \varepsilon I_j} y_i - m x_i - b, \qquad (2)$$

wobei $x_i$ und $y_i$ konstruktionsgemäß bekannt sind und $H_j$ gemessen ist, sowie

$$H_j^p = \sum_{i \varepsilon I_j} F_i \left( y_i - m x_i - b \right) \qquad (3)$$

wobei $F_i$, $x_i$ und $y_i$ konstruktionsgemäß bekannt sind und $H_j^P$ gemessen ist. Insgesamt stellen die Gleichungen 2 und 3 ein lineares Gleichungssystem mit den zwei unbekannten Größen m und b dar, welches wegen der randomisierten Filterelemente $F_i$ linear unabhängig ist. Daher sind m und b und somit die Position des Kantenelementes 21 unmittelbar berechenbar.

Beispielsweise kann die genaue Bestimmung der Position eines Kantenelementes 21 günstig mittels einer 3D-Modulationseinrichtung 12 erfolgen, wenn die Apertur des Linsen-Pupillen-Systems 10 relativ groß ist, so daß das Bild des Kantenelementes 21 hinter dem Linsen-Pupillen-System 10 schärfer ist, als mit der Detektoranordnung 17 erfaßbar. In einem solchen Falle wird die Lichtenergie in der Fokusebene hinter dem zweiten Linsen-Pupillen-System 16 entsprechend der Kirchhoffschen Randbedingung durch die Position der Filterelemente 18 in der 3D-Modulationseinrichtung 12 bestimmt. Diese Lichtenergie wird von Detektorelementen 19 gemessen und kann zur genauen Berechnung von Steigung m und Achsenabschnitt b des Kantenelementes verwendet werden.

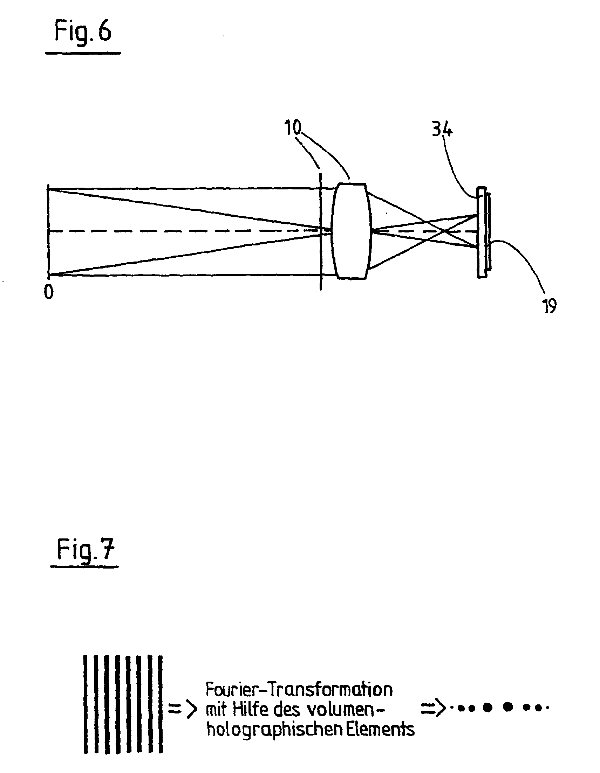

Nachfolgend wird ein Ausführungsbeispiel für die Fourier-Transformation eines Musters durch die 3D-Modulationseinrichtung anhand der Figuren 6 bis 8 beschrieben.

Erfindungsgemäß befindet sich hinter einem Linsen-Pupillen-System 10 an der Stelle der 3D-Modulationseinrichtung 12 gemäß Figur 1 ein mit Hilfe der optischen Holographie oder anderer spezieller Techniken, wie z. B. Lichtstrahl-, Elektronenstrahl-, Ionenstrahltechniken u.a.m., hergestelltes optisches volumenholographisches Element 34, in dem mehrere 3D-Bragg-Beugungsgitter superponiert wurden, wie dies in Figur 6 dargestellt ist.

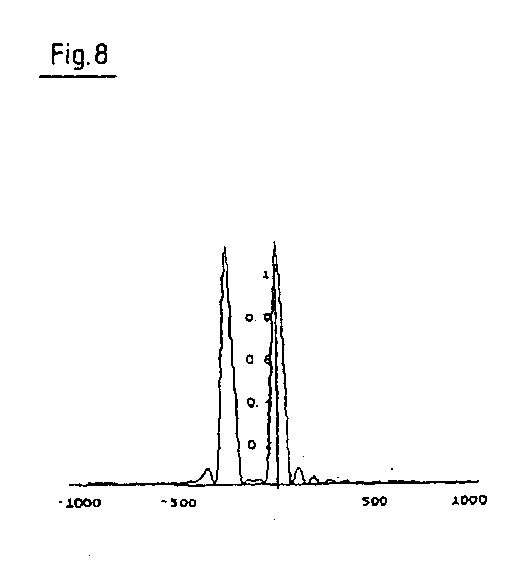

Mit Hilfe der Optik (Linsen-Pupillen-System 10) wird eine Struktur O, z.B. Balkenstruktur oder Schachbrettmuster) auf das volumenholographische Element 34 abgebildet. Unmittelbar hinter dem volumenholographischen Element 34 befindet sich das Detektorelement 19, welches bspw. in Form eines die elektronische Retina bildenden CCD-Empfängersystems, ausgeführt ist. Das volumenholographische Element 34 ist so aufgebaut, daß direkt hinter ihm die Fourier-Transformierte des Bildes einer Struktur O, z.B. der Balkenstruktur, entsteht, wie dies in Figur 7 dargestellt ist.

Wird ein volumenholographisches Element 34 benutzt, in dem mehr als 20 Bragg-Gitter in unterschiedlichen Raumrichtungen superponiert wurden und bei denen sich die Neigungen der einzelnen Bragg-Gitter um ein Winkelgrad unterscheiden, die Dicke des Volumenhologramms 250 μm und der Brechungsindex des Materials, in das die Bragg-Gitter eingespeichert wurden, 1,5 für die Wellenlänge des HeNe-Lasers beträgt, dann hat die Fourier-Transformierte einer Balkenstruktur entsprechend den in Figur 8 dargestellten Verlauf (zweidimensionale Darstellung).

Das in Figur 8 erläuterte Ausführungsbeispiel ermöglicht die Erkennung bzw. Unterscheidung von Mustern (insbesondere von Balken- und Schachbrettmustern) in Echtzeit.

Im folgenden wird ein Ausführungsbeispiel für eine Bild- bzw. Bildfolgenverarbeitung mit neuronalen Netzen beschrieben.

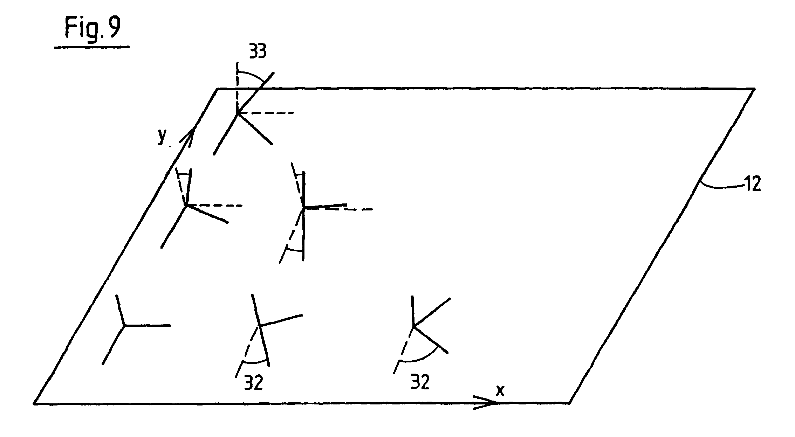

Fig. 9 zeigt die Situation bei Verwendung eines gekrümmten 3D-Beugungsgitters in der x-y-Ebene einer 3D-Modulationseinrichtung 12, bei dem die Gitterelemente, dargestellt durch lokale Koordinatensysteme, um einen zur x-Koordinate proportionalen Azimutwinkel 32 sowie um einen zur y-Koordinate proportionalen Polarwinkel 33 gedreht sind. Zu jedem lokalen Helligkeitsmaximum der nullten Beugungsordnung bestimmt man die zugehörigen gebeugten Lichtstrahlen anhand der durch die Bragg-Bedingung bestimmten Farbe. Anhand der Lage der gebeugten Lichtstrahlen bestimmt man Azimutwinkel und Polarwinkel. Aus dem Azimutwinkel und dem Polarwinkel bestimmt man die x-Koordinate und die y-Koordinate des Ursprungsortes in der 3D-Modulationseinrichtung 12 mit erhöhter Genauigkeit.

Verwendet man ein in der x-y-Ebene der 3D-Modulationseinrichtung befindliches ungekrümmtes 3D-Beugungsgitter, so bestimmt man zu jedem lokalen Helligkeitsmaximum der nullten Beugungsordnung die zugehörigen gebeugten Lichtstrahlen anhand der durch die Bragg-Bedingung bestimmten Wellenlänge. Anhand der Lage der nullten Beugungsordnung und der höheren Beugungsordnungen bestimmt man die Position des Ursprungsortes in der 3D-Modulationseinrichtung subpixelgenau aufgrund der Redundanz der Daten und mit Hilfe eines adäquaten Interpolationsverfahrens.

Dabei ist die Durchführung der folgenden Schritte vorteilhaft:

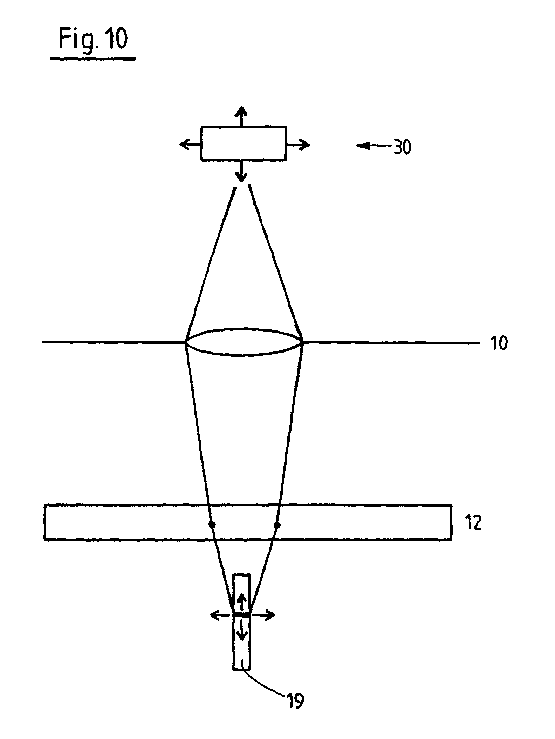

Man verwendet als markantes Muster ein Kantenelement 21 entsprechend Figur 5b und ein ungekrümmtes 3D-Beugungsgitter. Man bestimmt für ein Detektorelement 19 die resultierenden Beugungsmuster in einer Detektoranordnung 17 für alle Positionen und Orientierungen eines Objekts 30 und der Detektorelemente 19 (vgl. Fig. 10) und speichere die Zuordnung der Position und Orientierung zu jedem Beugungsmuster. Wegen der Translationsinvarianz des ungekrümmten 3D-Beugungsgitters verwende man diese Zuordnung für jedes Detektorelement 19.

Vorteilhafterweise wählt man die Muster oder markanten 3D-Merkmale im Hinblick auf eine gute Unterscheidbarkeit der resultierenden Signalmuster der Detektorelemente 19 hinreichend groß und unterschiedlich, so daß der aus der Theorie neuronaler Netzwerke bekannte "crosstalk" aufgrund der Gesetze großer Zahlen irrelevant wird. Ferner wählt man die Muster oder markanten Merkmale zu demselben Zweck relativ unterschiedlich, d. h. mit relativ geringem Überlapp im Sinne der Theorie neuronaler Netzwerke. Generell ermöglicht eine solche Anwendung von neuronalen Netzwerken die Erkennung von Relationen zwischen räumlichen und/oder zeitlichen Objektparametern von stationären und/oder bewegten 3D-Merkmalen und den resultierenden Signalmustern der Detektorelemente 19, dies gilt besonders bei Verwendung von Perzeptron-Lernalgorithmen und Neuronen mit einigen multilinearen Kopplungen, d. h. mit Kopplungen zwischen zwei, drei, vier etc. Neuronen. Insbesondere können diese Relationen durch das Netzwerk gelernt werden, auch wenn für diese Relationen keine klassischen Berechnungsvorschriften und/oder -algorithmen entwickelt sind. Bei komplizierten Lernaufgaben zu den hier auftretenden Zuordnungen ist ein Perzeptron-Lernalgorithmus mit Kopplungen zwischen einer Maximalzahl von Neuronen, welche an die Kompliziertheit der Lernaufgabe angepaßt ist, und für welchen ein für die Lernaufgabe gültiger Konvergenzbeweis vorliegt, zu verwenden. Solche Lernalgorithmen und Konvergenzbeweise findet man in "Neuronal Adaptation Theory", Carmesin, H. O., 1996, ISBN 3-631-30039-5.

Im Hinblick auf die immer begrenzte Speicherkapazität von neuronalen Netzwerken definiert man zunächst nur die wichtigsten markanten Merkmale und Muster und speichert die zugehörigen Zuordnungen in das Netzwerk. Beim Speichern weiterer Zuordnungen von weiteren markanten Merkmalen und/ oder Mustern prüft man stets die Güte der Wiedererkennung; läßt diese nach, so ist die Speicherkapazität vermutlich erreicht. Man verwendet dann ein Netzwerk mit mehr Neuronen.

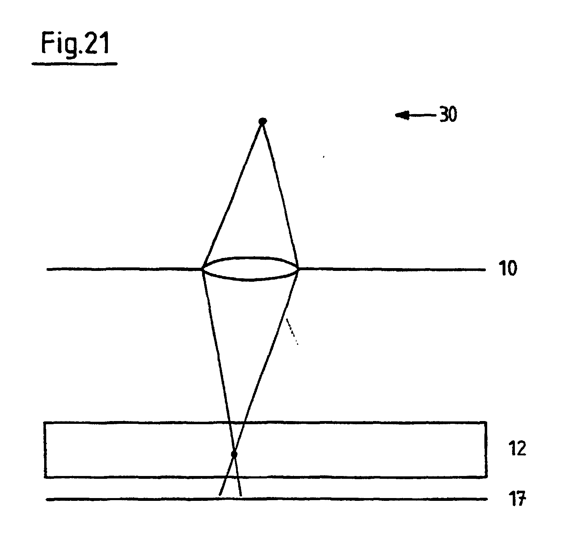

Nachfolgend wird ein Ausführungsbeispiel zur Bestimmung einer Tiefenkarte durch einen 3D-Talbot-Effekt im fokussierten Licht anhand der Figur 21 beschrieben.

Zunächst wird ein beliebiger Objektpunkt durch das Linsen-Pupillen-System 10 so abgebildet, daß der zugehörige Brennpunkt in der 3D-Modulationseinrichtung 12 entsteht. Die 3D-Modulationseinrichtung 12 besteht aus Schichten planarer Gitter, im folgenden auch Planargitter genannt, die vorzugsweise senkrecht zur optischen Achse des Linsen-Pupillen-Systems 10 angeordnet sind. In der in beliebigem Abstand hinter der 3D-Modulationseinrichtung 12 und senkrecht zur optischen Achse des Linsen-Pupillen-Systems 10 plazierbaren Ebene der aus mehreren Detektorelemente 19 gebildeten Detektoreinrichtung 13 entsteht durch Selbstabbildung (Talbot-Effekt) ein Bild desjenigen planaren Gitters, welches sich in der Nähe des Brennpunktes befindet. Hierbei wird das planare Gitter um folgenden Faktor vergrößert: Brennpunkt-Detektoreinrichtung-Abstand dividiert durch Brennpunkt-Planargitter-Abstand. Dies ist derselbe Faktor, mit dem das planare Gitter als Schatten hinter dem Brennpunkt vergrößert würde, wenn ein üblicher Schatten entstünde.

In der durch die Detektorelemente 19 gebildeten Detektoreinrichtung 13 wird das Bild des Gitters detektiert. Läge nur ein Objektpunkt vor, so würde die Vergrößerung des Planargitters gemessen, daraus mit Hilfe des obigen Vergrößerungsfaktors die 3D-Position des Brennpunktes berechnet und aus der 3D-Position des Brennpunktes würde anhand der Abbildungseigenschaft des Linsen-Pupillen-Systems 10 die 3D-Position des Objektpunktes rückwärts bestimmt. Da im allgemeinen viele Objektpunkte vorliegen, wird im Prinzip genauso im einzelnen jedoch abweichend, vorzugsweise wie folgt verfahren: Zum Zweck der Berechnung wird die Detektoreinrichtung in Detektorelemente 19 eingeteilt. Für jedes Detektorelement 19 wird das Fourierspektrum des Bildes bestimmt; hieraus wird die abgebildete Gitterkonstante berechnet; daraus wird der Vergrößerungsfaktor des planaren Gitters ausgerechnet. Hierbei wird das betreffende Planargitter vorteilhafterweise dadurch identifiziert, daß jedes planare Gitter in der 3D-Modulationseinrichtung 12 eine eigene Orientierung aufweist, die im Fourierspektrum wiedererkannt wird. Für jedes Detektorelement 19 wird aus dem Vergrößerungsfaktor des identifizierten planaren Gitters die 3D-Position des zugehörigen Brennpunktes und daraus die 3D-Position des zugehörigen Objektpunktes bestimmt. Diese 3D-Positionen der Objektpunkte beinhalten insbesondere eine Tiefenkarte.

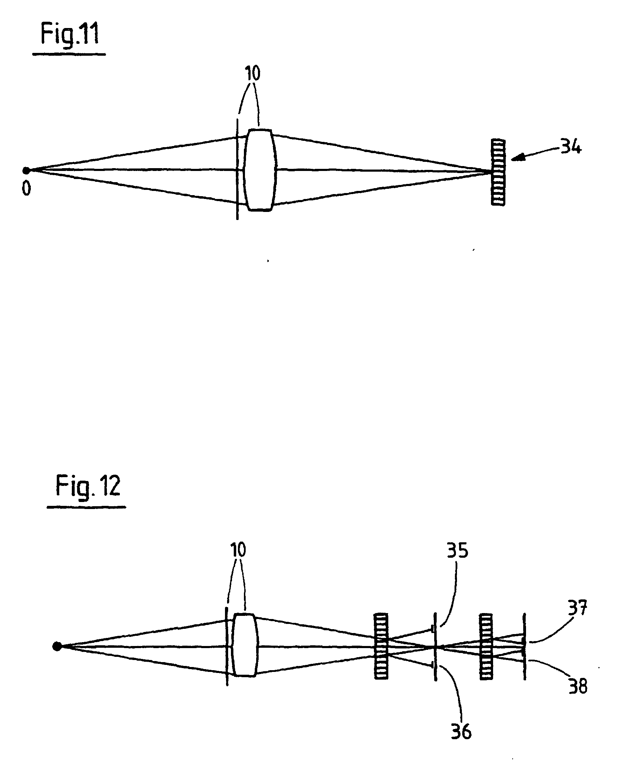

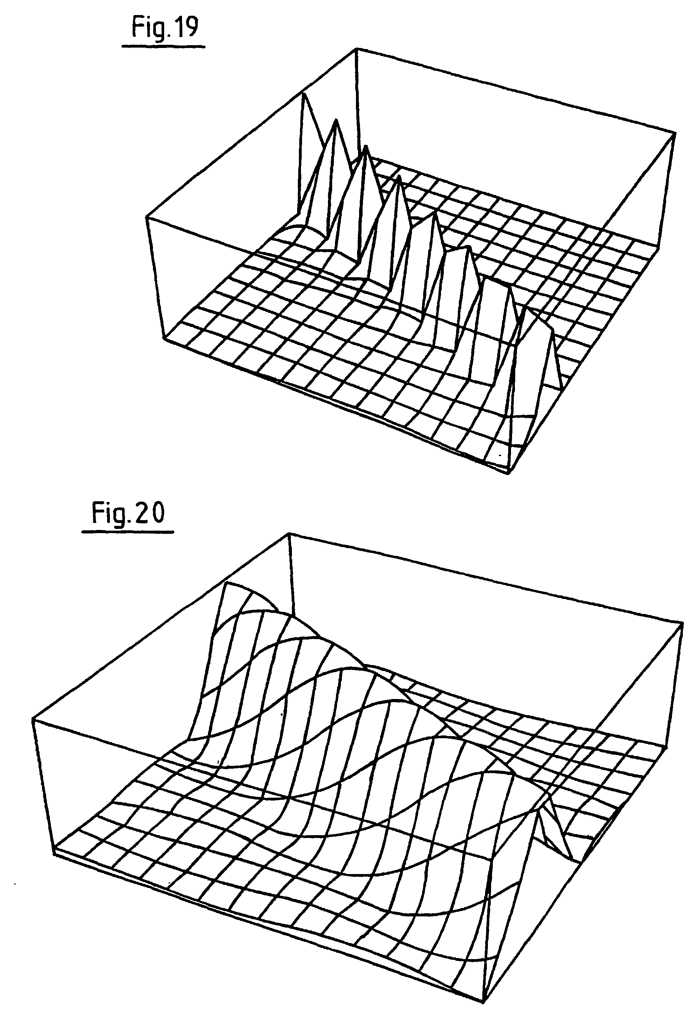

Nachfolgend wird ein Ausführungsbeispiel für eine volumenholographisch bestimmte Tiefenkarte anhand der Figuren 11 bis 20 beschrieben.

Hinter dem Linsen-Pupillen-System 10 gemäß Figur 11 befindet sich an der Stelle der 3D-Modulationseinrichtung 12 gemäß Figur 1 ein mit Hilfe der Volumenholographie oder anderer spezieller Techniken (z.B. Lichtstrahl-, Elektronenstrahl-, Ionenstrahltechniken u.a.m.) hergestelltes 3D-Beugungsgitter 34, welches die Eigenschaften eines 3D-Bragg-Gitters besitzt.

Durch Änderung des Abstandes und der Richtung eines mit weißem Licht leuchtenden Flächenelements O vor dem Linsen-Pupillen-System 10 entstehen nach dem 3D-Beugungsgitter 34 Intensitätsverteilungen, aus deren spektraler Verteilung und Lage die Richtung und die Entfernung eines durch Reflexion oder Eigenstrahlung leuchtenden Flächenelements O bestimmt werden kann. Mit den so gewonnenen Daten läßt sich eine Tiefenkarte erstellen.

Der Aufbau zur Messung der Intensitätsverteilungen ist in Figur 12 dargestellt. Dabei wird mittels der Detektorelemente 35, 36 bei vor dem Fokus befindlichem Bragg-Gitter sowie mittels Detektorelementen 37, 38 bei sich hinter dem Fokus befindendem Bragg-Gitter die Intensitätsverteilungen gemessen. Die Fokuslagen vor bzw. hinter dem 3D-Beugungsgitter bzw. Volumenhologramm in Form eines Bragg-Gitters 34 werden durch unterschiedliche Entfernungen des leuchtenden Flächenelementes O vor dem Linsen-Pupillen-System 10 hervorgerufen.

Der Abstand zwischen dem Bragg-Gitter 34 und der Empfängerebene wird so eingestellt, daß sich die Intensitätsverteilungen am Ort der Detektorelemente 37 und 38 superponieren.

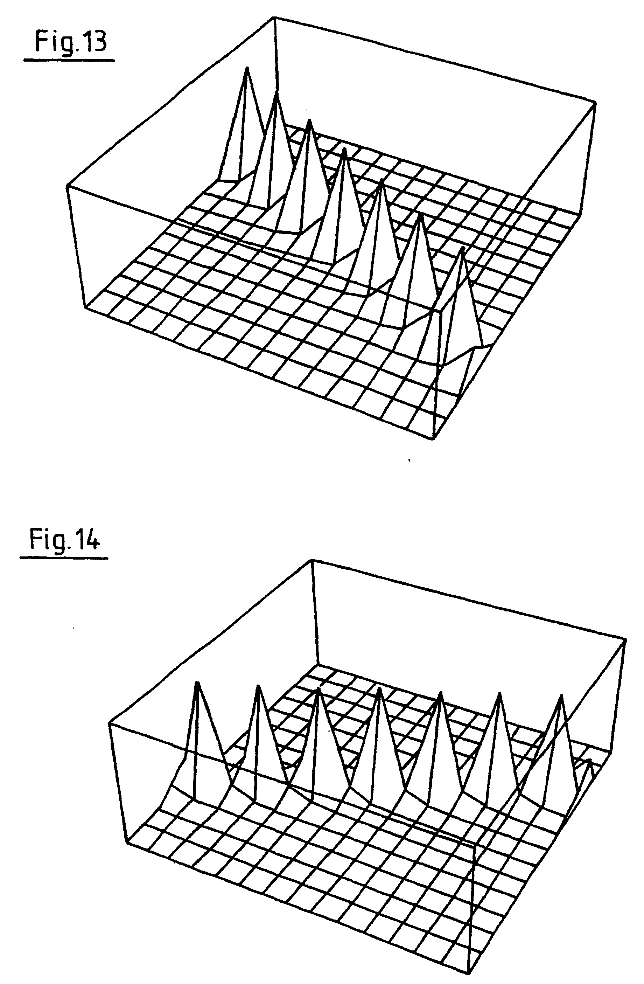

Figur 13 zeigt die Intensitätsverteilung gemessen am Ort des Detektorelementes 35.

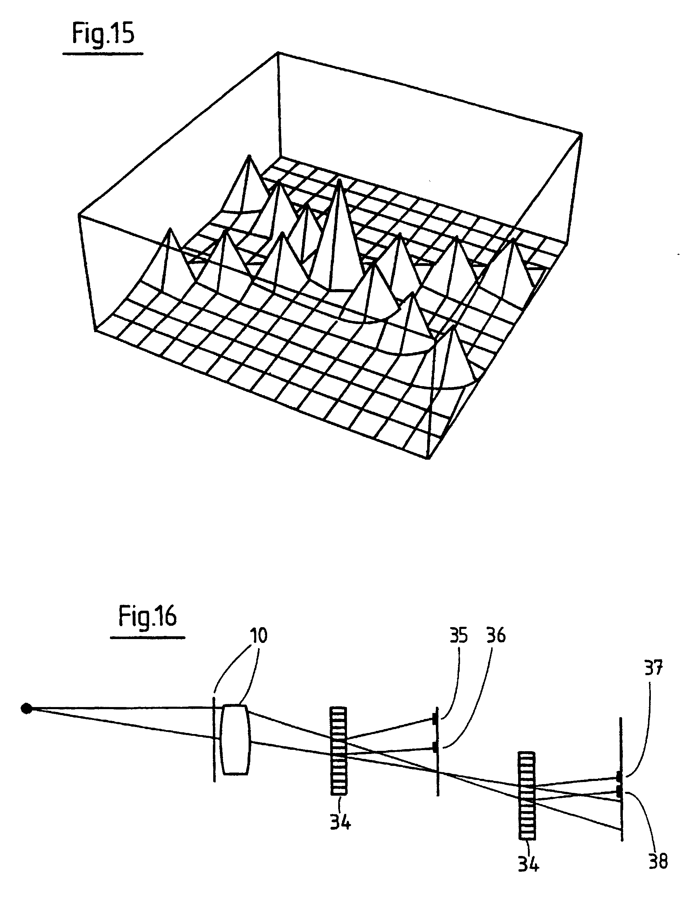

In Figur 14 ist die Intensitätsverteilung am Ort des Detektors 36 und Figur 15 die Superposition der Intensitätsverteilungen am Ort der Detektoren 37 und 38 dargestellt.

Die Auswertung der Intensitätsverteilungen am Ort der Detektoren 35 bis 38 ermöglicht eine genaue Abstandsbestimmung des leuchtenden Flächenelements O vor dem Linsen-Pupillen-System 12.

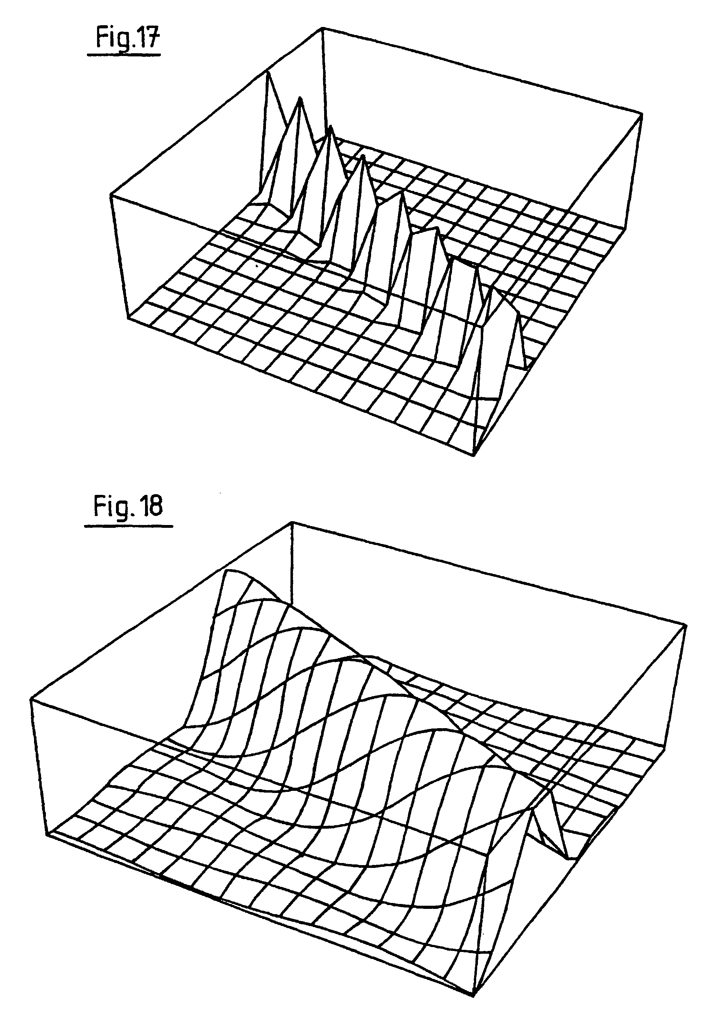

In Figuren 16 bis 20 ist in der Figuren 11 bis 15 beschriebene Sachverhalt bei weißem Licht für außeraxiale Positionen des leuchtenden Flächenelementes O dargestellt.

Aus der spektralen Verteilung und Lage der Intensitätsverteilungen hinter dem Bragg-Gitter 34 in der Ebene des CCD-Empfängersystems 35 bis 38 lassen sich Abstand und Richtung des leuchtenden Flächenelements O vor dem Linsen-Pupillen-System 10 bestimmen. In Figur 21 ist eine Anordnung zum 3D-Talbot-Effekt dargestellt.

Die erfindungsgemäße Vorrichtung nach Anspruch 19 kann in der 3D-Modulationseinrichtung (12) beispielsweise einen Modulationsfilter (15) in der Fokusebene des Linsen-Pupillen-Systems umfassen, welcher Umlenkelemente (23) in Form von Spiegelelementen enthält.

Ebenso kann das 3D-Beugungsgitter (Ansprüche 20, 21) beispielsweise eines der 231 möglichen periodischen 3D-Kristallgitter darstellen, nicht periodisch sein, akustooptische Zellen, Wignerkristalle oder Polymerlatices umfassen. Das 3D-Beugungsgitter kann holographisch hergestellt sein, durch biologische Strukturen und/oder Flüssigkristalle und/oder Ferroelektrika aufgebaut sein oder elektrooptisch und/oder magnetooptisch und/oder mechanisch durchstimmbar sein.

Die Detektoreinrichtung (13) der Vorrichtung kann spektrale Empfindlichkeit, Richtungsempfindlichkeit und mindestens einen Polarisationsfilter aufweisen.

Bei der erfindungsgemäßen Vorrichtung kann auch ein korrelatoroptischer Aufbau vor oder hinter der Detektorebene zur Durchführung der Verrechnungen vorgesehen sein, der beispielsweise eine 4f-Optik umfaßt. In der 3D-Modulationseinrichtung (12) können Filterelemente (18) und/oder Umlenkelemente (23) und/oder Gitterelemente mittels eines Zufallszahlengenerators relativ abwechslungsreich angeordnet sein.

## Bezugszeichenliste

10 - Linsen-Pupillen-Systeme
11 - elektromagnetischer Strahl
12 - 3D-Modulationseinrichtung
13 - Detektorvorrichtung
14 - Ursprungsort eines elektromagnetischen Strahles in der 3D-Modulationseinrichtung
15 - Modulationsfilter
16 - zweites Linsen-Pupillen-Systems
17 - bildgebende Detektoranordnung
18 - Filterelement bzw. Bildelement
19 - Detektorelement
20 - Urbild eines Detektorelements
21 - Kantenelement
23 - Umlenkelement
24 - nicht umgelenkte elektromagnetische Strahlen
25 - nicht umgelenkte elektromagnetische Strahlen
26 - umgelenkte elektromagnetische Strahlen
27 - umgelenkte elektromagnetische Strahlen
28 - Airy-Disk-Durchmesser
29 - Distanz zwischen 3D-Modulationseinrichtung und Detektoreinrichtung
30 - Objekt
32 - Azimutwinkel
33 - Polarwinkel
34 - 3D-volumenholographisches Beugungsgitter

## Patentansprüche

1. Verfahren zur genauen Bestimmung von räumlichen und/oder zeitlichen Abständen im fokussierten Bild oder fokussierten Bildfolgen eines Linsen-Pupillen-Systemes und/oder von räumlichen und/oder zeitlichen Objektparametern (10) und/oder spektralen und/oder ortsfrequenzspezifischen Objektparametern, wie z.B. Geschwindigkeit, Tiefe, Farbe oder Form, insbesondere zur genauen und intelligenten Steuerung von Automaten und zur meßtechnischen Überwachung von Produktionsabläufen, mit folgenden Verfahrensschritten:

   (a) eine Fokussierung der einfallenden elektromagnetischen Strahlen durch das Linsen-Pupillen-System (10) erfolgt,

   (b) Ortsspezifische Modulation der Ausbreitungsrichtung und/oder Intensität und/oder Wellenlänge und/oder Polarisation und/oder der zeitlichen Modulationsfrequenz der elektromagnetischen Strahlen (11) durch eine 3D-Modulationseinrichtung (12) hinter dem Linsen-Pupillen-System (10) in oder nahe bei der Fokusebene des Linsen-Pupillen-Systems (10);

   (c) Erfassung der modulierten elektromagnetischen Strahlen durch eine Detektoreinrichtung (13), welche sich hinter der 3D-Modulationseinrichtung (12) befindet;

   (d) Berechnung der räumlichen und/oder zeitlichen Abstände (14) der elektromagnetischen Strahlen in der 3D-Modulationseinrichtung (12) durch Bestimmung der Modulation und/oder Berechnung räumlicher und/oder zeitlicher und/oder spektraler und/oder ortsfrequenzspezfischer Objektparameter.

2. Verfahren nach Anspruch 1, gekennzeichnet durch die folgenden Verfahrensschritte:

   (b-1) Ortspezifische Modulation der elektromagnetischen Strahlen durch eine 3D-Modulationseinrichtung (12) mit einem oder mehreren Modulationsfiltern (15) in der Fokusebene des Linsen-Pupillen-Systems (10), welche einen einfallenden elektromagnetischen Strahl durch ortsspezifische, mit i indizierte Filterelemente (18), moduliert, wobei die Filterelemente (18) relativ abwechslungsreich im Hinblick auf die Lösbarkeit von Gleichungssystemen zur Durchführung von Schritt (d) modulierend bzw. nicht modulierend gewählt sind,

   (c-1) Fokussierung innerhalb der Detektoreinrichtung (13) durch ein zweites Linsen-Pupillen-System (16);

(c-2) Messung der modulierten elektromagnetischen Strahlen in der Fokusebene der Detektoreinrichtung (13) durch eine bildgebende Detektorenanordnung (17) von mit j indizierten Detektorelementen (19), in welche die Filterelemente (18) mit Index i aus einer zugehörigen Indexmenge $I_j$ projiziert werden;

(d-1) Berechnung der genauen Position einer durch Parameter bestimmten Intensitätsverteilung im Strahlengang unmittelbar vor der 3D-Modulationseinrichtung (12) im Urbild (20) eines j-ten Detektorelementes (19) aus den Messungen im j-ten Detektorelement (19), wobei die Berechnung so ausgeführt wird, daß die Zahl der Meßergebnisse die Zahl der zu bestimmenden Parameter aufgrund der Modulationsmessungen übersteigt und ein möglichst unabhängiges Gleichungssystem auftritt.

3. Verfahren nach Anspruch 1 oder 2, gekennzeichnet durch:
(d-1-1) Durchführung der Berechnung an einem Kantenelement (21) parametrisiert durch Steigung m und y-Achsenabschnitt b in der x-y-Ebene der 3D-Modulationseinrichtung (12) gemäß y = mx+b.

4. Verfahren nach einem der Ansprüche 1 bis 3, gekennzeichnet durch die Verwendung von j-ten Detektorelementen (19) zusammen mit benachbarten Detektorelementen (19).

5. Verfahren nach einem der Ansprüche 2 bis 4, gekennzeichnet durch die Verwendung von Filterelementen (18).

6. Verfahren nach Anspruch 1, gekennzeichnet durch die folgenden Verfahrensschritte:

(b-1) Ortsspezifische Modulation durch eine 3D-Modulationseinrichtung (12) in Form einer Einrichtung zur ortsspezifischen Umlenkung (22) mit Umlenkelementen (23) und ggf. zur Modulation von Intensität, Wellenlänge, Polarisation und Modulationsfrequenz von elektromagnetischen Strahlen in oder nahe bei der Fokusebene des Linsen-Pupillen-Systems (10);

(d-1) Berechnung des Ursprungsortes (14) eines betrachteten elektromagnetischen Strahles in der 3D-Modulationseinrichtung (12) anhand der in Detektorelementen (19) erfaßten Signale, und der daraus resultierenden räumlichen und/oder zeitlichen Abstände in fokussierten Bildfolgen des Linsen-Pupillen-Systemes (10) und/oder räumlichen und/oder zeitlichen Objektparametern.

7. Verfahren nach Anspruch 1, gekennzeichnet durch die folgenden Verfahrensschritte:

(b-1) Ortsspezifische Modulation der elektromagnetischen Strahlen durch eine 3D-Modulationseinrichtung (12) in Form eines gekrümmten 3D-Beugungsgitters in oder nahe bei der Fokusebene des Linsen-Pupillen-Systems (10), wobei die gebeugten Strahlen entsprechend der Reflexion an geneigten Netzebenen des gekrümmten 3D-Beugungsgitters orientiert und/oder entsprechend den Gitteraperturbedingungen in ihrer Intensität moduliert und/oder entsprechend der Bragg-Bedingung in der Wellenlänge moduliert und/oder entsprechend den Anisotropien des Beugungsgitters polarisiert und/oder entsprechend einer möglichen aufgeprägten zeitlichen Schwingung zeitlich moduliert sind, wobei die ortsspezifische Krümmung und die anderen Beugungsgittereigenschaften im Hinblick auf die ortsspezifische Modulierung in Bezug auf die Lösbarkeit von Gleichungssystemen zur Durchführung von Schritt d) hinreichend abwechslungsreich sind;

(d-1) Berechnung des Ursprungsortes (14) eines betrachteten elektromagnetischen Strahles in der 3D-Modulationseinrichtung (12) anhand der in Detektorelementen (19) erfaßten Signale und der daraus resultierenden räumlichen und/oder zeitlichen Abstände in fokussierten Bildfolgen des Linsen-Pupillen-Systemes (10) und/oder räumlichen und/oder zeitlichen Objektparametern.

8. Verfahren nach einem der Ansprüche 1, 6 oder 7, gekennzeichnet durch die folgenden Verfahrensschritt:

(c') Unterscheidung der in ein Detektorelement (19) einlaufenden elektromagnetischen Strahlen in solche, die aus einer 0. Beugungsordnung (24, 25), und solche, die aus einer höheren Beugungsordnung (26, 27) stammen, anhand der spezifischen Wellenlänge der gebeugten elektromagnetischen Strahlen gemäß der Bragg-Bedingung und/oder mit Hilfe richtungsspezifischer Detektorelemente;

(d') Berechnung des Ursprungsortes (14) eines betrachteten elektromagnetischen Strahles in der 3D-Modulationseinrichtung anhand der in Detektorelementen (19) erfaßten Signale und der daraus resultierenden räumlichen und/oder zeitlichen Abstände in fokussierten Bildfolgen des Linsen-Pupillen-Systemes (10) und/oder räumlichen und/oder zeitlichen Objektparametern.

9. Verfahren nach einem der Ansprüche 1, 6, 7 oder 8, gekennzeichnet durch die folgenden Verfahrensschritte:

(c") Anwendung eines zeitlichen Hochpaßfilters auf die durch ein Detektorelement (19) erfaßten Signale, wobei die durchgelassenen Frequenzen so adaptiv einzustellen sind, daß die bei Bildfolgen auftretende deutlich erhöhte seitliche Geschwindigkeit der höheren Beugungsordnungen erfaßt wird, und somit Unterscheidung der in ein Detektorelement (19) einlaufenden elektromagnetischen Strahlen in solche, die nicht umgelenkt sind (24, 25) bzw. aus einer 0. Beugungsordnung stammen, und solche, die umgelenkt sind (26, 27) bzw. aus einer höheren Beugungsordnung stammen;

(d") Berechnung des Ursprungsortes (14) eines betrachteten elektromagnetischen Strahles in der 3D-Modulationseinrichtung (12) anhand der in Detektorelementen (19) erfaßten Signale, und der daraus resultierenden räumlichen und/oder zeitlichen Abstände in fokussierten Bildfolgen des Linsen-Pupillen-Systemes (10) und/oder räumlichen und/oder zeitlichen Objektparametern.

10. Verfahren nach Anspruch 1, gekennzeichnet durch

(b-1) Ortsspezifische Modulation der elektromagnetischen Strahlen durch eine 3D-Modulationseinrichtung (12) in Form eines ungekrümmten 3D-Beugungsgitters in oder nahe bei der Fokusebene des Linsen-Pupillen-Systems (10), wobei die gebeugten Strahlen entsprechend der Reflexion an geneigten Netzebenen des ungekrümmten 3D-Beugungsgitters orientiert und/oder entsprechend den Gitteraperturbedingungen in ihrer Intensität moduliert und/oder entsprechend der Bragg-Bedingung in der Wellenlänge moduliert und/oder entsprechend den Anisotropien des Beugungsgitters polarisiert und/oder entsprechend einer möglichen aufgeprägten zeitlichen Schwingung zeitlich moduliert sind, wobei die Beugungsgittereigenschaften im Hinblick auf die Lösbarkeit von Gleichungssystemen zur Durchführung von Schritt d) hinreichend abwechslungsreich sind;

(d-1) Berechnung des Ursprungsortes (14) eines betrachteten elektromagnetischen Strahles in der 3D-Modulationseinrichtung (12) anhand der in Detektorelementen (19) erfaßten Signale und der daraus resultierenden räumlichen und/oder zeitlichen Abstände in fokussierten Bildfolgen des Linsen-Pupillen-Systemes (10) und/oder räumlichen und/oder zeitlichen Objektparametern.

11. Verfahren nach einem der Ansprüche 7 bis 10, dadurch gekennzeichnet, daß die Durchführung der Schritte c) und d) im Fraunhoferschen Fernfeld.

12. Verfahren nach einem der Ansprüche 7 bis 11, gekennzeichnet durch die Durchführung der Schritte c) und d) im Talbot- oder Fresnel-Ebenen im Nahfeld und auch anderen Bereichen hinter einem 3D-Beugungsgitter.

13. Verfahren nach Anspruch 12, gekennzeichnet durch die folgenden Verfahrensschritte:

- die Registrierung der Tiefenlage des Fokus in Talbot- und/oder Fresnel-Ebenen im Nahfeld und auch anderen Bereichen hinter einem 3D-Beugungsgitter mit einem tiefenempfindlichen Detektorelement (19);

- Berechnung der Differenz zwischen zwei benachbarten Entfernungen von Objekten (30).

14. Verfahren nach einem der Ansprüche 1 bis 13, gekennzeichnet durch die folgenden Verfahrensschritte:

(a'-1) Vorab Festlegen von markanten 3D-Merkmalen oder Mustern in Form von Bildelementen, zusammen mit einem ausgezeichneten Positionsbildelement als Ursprung eines lokalen Koordinatensystems für jedes Muster bzw. für jedes 3D-Merkmal;

(a'-2) Durchführung einer sogenannten Lernphase, wobei jedes 3D-Merkmal in jede 3D-Position und 3D-Orientierung gebracht wird, bzw. jedes Muster in jede Position und Orientierung gebracht wird; sodann das Detektorelement (19) j bestimmt wird, auf welches das Positionsbildelement projiziert wird, nachfolgend das zugehörige Signalmuster, einschließlich Signalmuster der Modulationen, der Detektorelemente (19) in der Umgebung des j-ten Detektorelementes (19) bestimmt wird, und anschließend die Zuordnung von j-tem Detektorelement (19) mitsamt Signalmuster der umgebenden Detektorelemente (19) zu Muster bzw. 3D-Merkmal, Position des Positionsbildelementes und Orientierung in ein assoziatives neuronales Netzwerk eingespeichert wird;

(a'-3) Anwendung der gelernten und gespeicherten Zuordnung auf das gemessene j-te Detektorelement (19) mitsamt Signalmuster der umgebenden Detektorelemente (19) zu Muster bzw. 3D-Merkmal, Position des Positionsbildelementes und Orientierung durch ein assoziatives neuronales Netzwerk.

15. Verfahren nach Anspruch 14, gekennzeichnet durch die Verwendung von Mustern in Form von Bildelementen basierend auf Intensitätsmustern in der Fokusebene des Linsen-Pupillen-Systems (10) und/oder Bewegungsmustern und/oder Frequenzmustern und/oder Farb- bzw. Wellenlängenmustern und/oder Polarisationsmustern und/oder Intensitätsmaxima und/oder 3-D Formen.

16. Verfahren nach einem der Ansprüche 14 oder 15, gekennzeichnet durch die Verwendung von neuronalen Netzwerken, die mit Hilfe der Hopfield-Regel oder einer Perzeptron-Lernregel oder einer Back-Propagation-Lernregel lernen und die Kopplungen zwischen zwei Neuronen und/oder Kopplungen zwischen drei Neuronen und/oder Kopplungen zwischen vier Neuronen und/oder Kopplungen zwischen einer Maximalzahl von Neuronen, welche an die Komplexität der Signalmuster angepaßt ist, enthalten, und die bei komplizierten Lernaufgaben einen Perzeptron-Lernalgorithmus zusammen mit Kopplungen mit einer Maximalzahl von Neuronen, welche an die Komplexität der Signalmuster angepaßt ist, enthalten, so daß eine Lösung der Lernaufgabe entsprechend einem Konvergenzbeweis sichergestellt ist.

17. Verfahren nach einem der Ansprüche 14 bis 16, gekennzeichnet durch
(a'-2-1) Speicherung der Zuordnung durch einen elektronischen oder optischen Speicher.

18. Verfahren nach einem der Ansprüche 1 bis 17, gekennzeichnet durch die Ausführung der Berechnungsschritte und/oder neuronalen Netzwerke vor oder nach der Detektorebene durch einen korrelatoroptischen Aufbau.

19. Vorrichtung zur teilweisen Durchführung des Verfahrens nach einem der Ansprüche 1 bis 18 mit einem Linsen-Pupillen-System (10) zur Abbildung einer Szene und mit einer hinter dem Linsen-Pupillen-System (10) befindlichen Detektoreinrichtung (13), gekennzeichnet durch eine 3D-Modulationseinrichtung (12) zur ortsspezifischen Modulation der Ausbreitungsrichtung und/oder Intensität und/oder Wellenlänge und/oder Polarisation und/oder Modulationsfrequenz der elektromagnetischen Strahlen, die sich hinter dem Linsen-Pupillen-System (10) in oder nahe der Fokusebene des Linsen-Pupillen-Systems (10) befindet, wobei die Detektoreinrichtung (13) zur Erfassung der modulierten elektromagnetischen Strahlen hinter der 3D-Modulationseinrichtung (12) angeordnet ist.

20. Vorrichtung nach Anspruch 19, dadurch gekennzeichnet, daß die 3D-Modulationseinrichtung (12) ein gekrümmtes 3D-Beugungsgitter umfaßt, das einfallende elektromagnetische Strahlen in gebeugte elektromagnetische Strahlen umsetzt, wobei die gebeugten Strahlen entsprechend der Reflexion an geneigten Netzebenen des gekrümmten 3D-Beugungsgitters orientiert und/oder entsprechend den Gitteraperturbedingungen in ihrer Intensität moduliert und/oder entsprechend der Bragg-Bedingung in der Wellenlänge moduliert und/oder entsprechend den Anisotropien des Beugungsgitters polarisiert und/oder entsprechend einer möglichen aufgeprägten zeitlichen Schwingung zeitlich moduliert sind.

21. Vorrichtung nach Anspruch 19, dadurch gekennzeichnet, daß die 3D-Modulationseinrichtung (12) ein ungekrümmtes 3D-Beugungsgitter umfaßt, wobei die gebeugten Strahlen entsprechend der Reflexion an geneigten Netzebenen des umgekrümmten 3D-Beugungsgitters orientiert und/oder entsprechend den Gitteraperturbedingungen in ihrer Intensität moduliert und/oder entsprechend der Bragg-Bedingung in der Wellenlänge moduliert und/oder entsprechend den Anisotropien des Beugungsgitters polarisiert und/oder entsprechend einer möglichen aufgeprägten zeitlichen Schwingung zeitlich moduliert sind.

22. Vorrichtung nach einem der Ansprüche 20 oder 21, dadurch gekennzeichnet, daß das 3D-Beugungsgitter mehrere Schichten von 2D-Gittern umfaßt.

23. Vorrichtung nach einem der Ansprüche 20 bis 22, dadurch gekennzeichnet, daß im abbildenden optischen Strahlengang zusätzlich zu dem 3D-Beugungsgitter weitere Gitter angebracht sind, welche den Kohärenzgrad und/oder den Polarisationszustand und/oder den Phasenzustand ändern.

24. Vorrichtung nach einem der Ansprüche 19 bis 23, dadurch gekennzeichnet, daß die Detektorvorrichtung (13) ein CCD-Array und/oder CID-Array aufweist.

25. Vorrichtung nach einem der Ansprüche 19 bis 24, dadurch gekennzeichnet, daß die Detektorelemente (19) Wellenleiter aufweisen.

26. Vorrichtung nach einem der Ansprüche 19 bis 25, dadurch gekennzeichnet, daß das Linsen-Pupillen-System (10), die Detektoreinrichtung (13) und die 3D-Modulationseinrichtung (12) für elektromagnetische Wellen, einschließlich Röntgenstrahlen, außerhalb des sichtbaren Lichtes ausgelegt sind.

27. Vorrichtung nach einem der Ansprüche 19 bis 26, dadurch gekennzeichnet, daß in die 3D-Modulationseinrichtung (12) und/oder die Detektoreinrichtung (13) eine trägerfrequente Schwingung eingebracht wird.

28. Vorrichtung nach einem der Ansprüche 19 bis 27, gekennzeichnet, durch ein neuronales Netzwerk.


**Claims**

1. Method for precise determination of spatial and/or temporal intervals in the focused image or focused image sequences of a lens-aperture diaphragm system and/or of spatial and/or temporal object parameters (10) and/or of spectral and/or spatial-frequency specific object parameters such as for example velocity, depth, colour or shape, particularly for precise and intelligent control of automatic machines and for monitoring of production processes by measuring technology means, with the following method steps:

   a) focusing of the incident electromagnetic rays is effected by means of the lens-aperture system (10),

   b) location-specific modulation of the spread direction and/or intensity and/or wavelength and/or polarisation and/or of the temporal modulation frequency of the electromagnetic rays (11) by means of a 3D modulation device (12) behind the lens-aperture diaphragm system (10) in or close to the focal plane of the lens-aperture diaphragm system (10);

   c) detection of the modulated electromagnetic rays by means of a detector device (13), which is located behind the 3D modulation device (12);

   d) calculation of the spatial and/or temporal intervals (14) of the electromagnetic rays in the 3D modulation device (12) by means of determination of the modulation and/or calculation of spatial and/or temporal and/or spectral and/or spatial-frequency specific object parameters.

2. Method according to claim 1, characterised by the following method steps:

   (b-1) location-specific modulation of the electromagnetic rays by means of a 3D modulation device (12) having one or more modulation filters (15) in the focal plane of the lens-aperture diaphragm system (10), which device modulates an incident electromagnetic ray by means of location-specific filter elements (18), which are indexed with i, the filter elements (18) being chosen modulating or not modulating to carry out step d), which elements are relatively varied with respect to the resolvability of equation systems;

   (c-1) focusing internally of the detector device (13) by means of a second lens-aperture diaphragm system (16);

   (c-2) measurement of the modulated electromagnetic rays in the focal plane of the detector device (13) by means of an image-producing detector arrangement (17) of the detector elements (19), which are indexed with j and in which the filter elements (18) having index i are projected from an associated index quantity $I_j$;

   (d-1) calculation of the precise position of an intensity distribution, which is determined by means of parameters, in the beam path immediately in front of the 3D modulation device (12) in the pre-image (20) of a j'th detector element (19) from the measurements in the j'th detector element (19), the calculation being carried out such that the number of measured results exceeds the number of parameters to be determined on the basis of the modulation measurements and as independent as possible an equation system occurs.

3. Method according to claim 1 or 2, characterised by: (d-1-1) carrying out of the calculation on an edge element (21) parameterised by gradient m and y-axis portion b in the x-y plane of the 3D modulation device (12) according to $y = mx + b$.

4. Method according to one of the claims 1 to 3, characterised by the use of j'th detector elements (19) together with adjacent detector elements (19).

5. Method according to one of the claims 2 to 4, characerised by the use of filter elements (18).

6. Method according to claim 1, characterised by the following method steps:

   (b-1) location-specific modulation by means of a 3D modulation device (12) in the form of a device for location-specific deflection (22) with deflection elements (23) and if necessary for modulation of intensity, wavelength, polarisation and modulation frequency of electromagnetic rays in or close to the focal plane of the lens-aperture diaphragm system (10);

(d-1) calculation of the original location (14) of an observed electromagnetic ray in the 3D modulation device (12) with signals detected in the detector elements (19), and with the spatial and/or temporal intervals resulting therefrom in the focused image sequences of the lens-aperture diaphragrn system (10) and/or with spatial and/or temporal object parameters.

7. Method according to claim 1, characterised by the following method steps:

(b-1) location-specific modulation of the electromagnetic rays by means of a 3D modulation device (12) in the form of a curved 3D diffraction grating in or close to the focal plane of the lens-aperture diaphragm system (10), the diffracted rays being orientated corresponding to the reflection in inclined grate planes of the curved 3D diffraction grating and/or being modulated in their intensity corresponding to the grating aperture conditions and/or being modulated in wavelength corresponding to the Bragg condition and/or being polarised corresponding to the anisotropies of the diffraction grating and/or being modulated temporally corresponding to a possible impressed temporal oscillation, the location-specific curvature and the other diffraction grating properties with respect to the location-specific modulation being adequately varied concerning the resolvability of the equation systems for carrying out step d);

(d-1) calculation of the original location (14) of an observed electromagnetic ray in the 3D modulation device (12) with signals detected in the detector elements (19) and with the spatial and/or temporal intervals resulting therefrom in focused image sequences of the lens-aperture diaphragm system (10) and/or with spatial and/or temporal object parameters.

8. Method according to one of the claims 1, 6 or 7, characterised by the following method steps:

(c') differentiation of the electromagnetic rays, which enter a detector element (19), into those which derive from a O'th diffraction order (24, 25) and those which derive from a higher diffraction order (26, 27), with the help of the specific wavelength of the diffracted electromagnetic rays according to the Bragg condition and/or with the help of direction-specific detector elements;

(d') calculation of the original location (14) of an observed electromagnetic ray in the 3D modulation device with signals detected in the detector elements (19) and with the spatial and/or temporal intervals resulting therefrom in focused image sequences of the lens-aperture diaphragm system (10) and/or with spatial and/or temporal object parameters.

9. Method according to one of the claims 1, 6, 7 or 8, characterised by the following method steps:

(c") use of a temporal high-pass filter on the signals detected by a detector element (19), the frequencies which pass through being able to be adaptively adjusted such that the significantly increased lateral velocity of the higher diffraction orders, which result during image sequences, is detected, and hence differentiation of the electromagnetic rays, which enter a detector element (19), into those which are not deflected (24, 25) or derive from a O'th diffraction order and those which are deflected (26, 27) or derive from a higher diffraction order:

(d") calculation of the original location (14) of an observed electromagnetic ray in the 3D modulation device (12) with signals detected in the detector elements (19) and with the spatial and/or temporal intervals resulting therefrom in focused image sequences of the lens-aperture diaphragm system (10) and/or with spatial and/or temporal object parameters.

10. Method according to claim 1, characterised by

(b-1) location-specific modulation of the electromagnetic rays by means of a 3D modulation device (12) in the form of a non-curved 3D diffraction grating in or close to the focal plane of the lens-aperture diaphragm system (10), the diffracted rays being orientated corresponding to the reflection in inclined grate planes of the non-curved 3D diffraction grating and/or being modulated in their intensity corresponding to the grating aperture conditions and/or being modulated in wavelength corresponding to the Bragg condition and/or being polarised corresponding to the anisotropies of the diffraction grating and/or being modulated temporally corresponding to a possible impressed temporal oscillation, the diffraction grating properties with respect to the resolvability of the equation systems being adequately varied for carrying out step d);

(d-1) calculation of the original location (14) of an observed electromagnetic ray in the 3D modulation device (12) with signals detected in the detector elements (19) and with spatial and/or temporal intervals resulting therefrom in focused image sequences of the lens-aperture diaphragm system (10) and/or with spatial and/or temporal object parameters.

11. Method according to one of the claims 7 to 10, characterised by carrying out of the steps c) and d) in the Fraunhofer far zone.

12. Method according to one of the claims 7 to 11, characterised by carrying out of the steps c) and d) in the Talbot or Fresnel planes in the near field and also in other regions behind a 3D diffraction grating.

13. Method according to claim 12, characterised by the following method steps:

  • recording of the depth location of the focus in Talbot and/or Fresnel planes in the near field and also in other regions behind a 3D diffraction grating with a depth-sensitive detector element (19);

  • calculation of the difference between two adjacent spacings of objects (30).

14. Method according to one of the claims 1 to 13, characterised by the following method steps:

  (a'-1) firstly, determination of prominent 3D features or patterns in the form of image elements, together with an outstanding position image element as origin of a local co-ordinate system for each pattern or for each 3D feature:

  (a'-2) carrying out of a so-called learning phase, each 3D feature being brought into each 3D position and 3D orientation or each pattern being brought into each position and orientation; thereupon, the detector element (19) j is determined, onto which the position image element is projected, subsequently, the associated signal pattern, including the signal pattern of the modulations, of the detector elements (19) in the vicinity of the j'th detector element (19) is determined, and then, the assignment of the j'th detector element (19) together with the signal pattern of the surrounding detector elements (19) to a pattern or 3D feature, position of the position image element and orientation is stored in an associative neural network.

  (a'-3) use of the learnt and stored assignment of the measured j'th detector element (19) together with the signal pattern of the surrounding detector elements (19) to a pattern or 3D feature, position of the position image element and orientation by means of an associative neural network.

15. Method according to claim 14, characterised by the use of patterns in the form of image elements, based upon intensity patterns in the focal plane of the lens-aperture diaphragm system (10), and/or movement patterns and/or frequency patterns and/or colour or wavelength patterns and/or polarisation patterns and/or maximum intensities and/or 3D shapes.

16. Method according to one of the claims 14 or 15, characterised by the use of neural networks, which learn with the help of the Hopfield Rule or with a perceptron learning rule or with a back-propagation learning rule and contain the couplings between two neurons and/or couplings between three neurons and/or couplings between four neurons and/or couplings between a maximum number of neurons, which is adapted to the complexity of the signal patterns, and which networks contain a perceptron learning algorithm, in the case of complicated learning exercises, together with couplings with a maximum number of neurons, which is adapted to the complexity of the signal patterns, so that a solution to the learning exercise corresponding to a convergence proof is ensured.

17. Method according to one of the claims 14 to 16, characterised by
(a'-2-1) storage of the assignment by means of an electronic or optical memory.

18. Method according to one of the claims 1 to 17, characterised by the implementation of the calculation steps and/or neural networks before or after the detector plane by means of an optical correlator structure.

19. Device for partial implementation of the method according to one of the claims 1 to 18, having a lens-aperture diaphragm system (10) for imaging of a scene and having a detector device (13) situated behind the lens-aperture diaphragm system (10), characterised by a 3D modulation device (12) for location-specific modulation of the spread direction and/or intensity and/or wavelength and/or polarisation and/or modulation frequency of the electromagnetic rays, which modulation device is situated behind the lens-aperture diaphragm system (10) in or close to the focal plane of the lens-aperture diaphragm system (10), the detector device (13) for detection of the modulated electromagnetic rays being disposed behind the 3D modulation device (12).

**20.** Device according to claim 19, characterised in that the 3D modulation device (12) comprises a curved 3D diffraction grating which converts incident electromagnetic rays into diffracted electromagnetic rays, the diffracted rays being orientated corresponding to the reflection in inclined grate planes of the curved 3D diffraction grating and/or being modulated in their intensity corresponding to the grating aperture conditions and/or being modulated in wavelength corresponding to the Bragg condition and/or being polarised corresponding to the anisotropies of the diffraction grating and/or being modulated temporally corresponding to a possible impressed temporal oscillation.

**21.** Device according to claim 19, characterised in that the 3D modulation device (12) comprises a non-curved 3D diffraction grating, the diffracted rays being orientated corresponding to the reflection in inclined grate planes of the curved 3D diffraction grating and/or being modulated in their intensity corresponding to the grating aperture conditions and/or being modulated in wavelength corresponding to the Bragg condition and/or being polarised corresponding to the anisotropies of the diffraction grating and/or being modulated temporally corresponding to a possible impressed temporal oscillation.

**22.** Device according to one of the claims 20 or 21, characterised in that the 3D diffraction grating comprises a plurality of layers of 2D gratings.

**23.** Device according to one of the claims 20 to 22, characterised in that further gratings are fixed additionally to the 3D diffraction grating in the imaging optical path of the rays and change the degree of coherence and/or the polarisation state and/or the phase state.

**24.** Device according to one of the claims 19 to 23, characterised in that the detector device (13) is a CCD array and/or CID array.

**25.** Device according to one of the claims 19 to 24, characterised in that the detector elements (19) are waveguides.

**26.** Device according to one of the claims 19 to 25, characterised in that the lens-aperture diaphragm system (10), the detector device (13) and the 3D modulation device (12) are designed for electromagnetic waves, including X-rays, outwith visible light.

**27.** Device according to one of the claims 19 to 26 characterised in that a carrier frequency oscillation is introduced into the 3D modulation device (12) and/or the detector device (13).

**28.** Device according to one of the claims 19 to 27, characterised by a neural network.

**Revendications**

**1.** Procédé pour déterminer de manière précise des distances dans l'espace et/ou dans le temps dans l'image focalisée ou dans des suites d'images focalisées d'un système à diaphragme d'ouverture et lentilles et/ou de paramètres d'objets (10) dans l'espace et/ou dans le temps et/ou des paramètres d'objets spectraux et/ou spécifiques au lieu tels que la vitesse, la profondeur, la couleur et la forme, notamment pour la commande précise et intelligente d'automates et pour la surveillance métrologique de procédés de fabrication comprenant les étapes suivantes :

(a) on focalise le rayon électromagnétique incident par un système à diaphragme d'ouverture et lentilles (10),
(b) on effectue la modulation spécifique au lieu de la direction d'extension et/ou de l'intensité et/ou de la longueur d'onde et/ou de la polarisation et/ou de la fréquence de modulation dans le temps des rayons électromagnétiques (11) par une installation de modulation 3D (12) derrière le système à diaphragme d'ouverture et lentilles (10) dans ou à proximité du plan focal du système à diaphragme d'ouverture et lentilles (10),
(c) on saisit le rayon électromagnétique modulé à l'aide d'une installation de détection (13) située derrière l'installation de modulation 3D (12),
(d) on calcule les intervalles (14) d'espace et/ou de temps des rayons électromagnétiques dans l'installation de modulation 3D (12) en déterminant la modulation et/ou en calculant les paramètres d'objets de l'espace et/ou du temps et/ou de spectres et/ou spécifiques à la fréquence locale.

**2.** Procédé selon la revendication 1,
caractérisé par les étapes suivantes :

(b-1) modulation spécifique au lieu des rayons électromagnétiques par une installation de modulation 3D (12) à l'aide d'un ou plusieurs filtres de modulation (15) dans le plan de focalisation du système à diaphragme d'ouverture et lentilles (10) qui modulent un rayon électromagnétique incident par des éléments de filtre (18) d'indice i, spécifique au lieu, les éléments de filtre (18) étant choisis avec une diversité relativement importante du point de vue de la résolution de systèmes d'équation pour l'exécution de l'étape (d) de façon à moduler ou non moduler ;

(c-1) on focalise dans l'installation de détection (13) à l'aide d'un second système à diaphragme d'ouverture et lentilles (16) ;

(c-2) on mesure les rayons électromagnétiques modulés dans le plan focal de l'installation de détection (13) par un dispositif de détecteur (17) générant l'image avec j éléments de détecteur (19) indexés, dans lesquels on projette les éléments de filtre (18) d'indice i d'une quantité d'index $I_j$ correspondante ;

(d-1) on calcule la position précise par une répartition d'intensité définie par les paramètres dans le rayon lumineux, directement avant l'installation de modulation 3D (12) dans l'image d'origine (20) de chaque élément de détecteur (19) d'ordre j à partir des mesures dans l'élément de détecteur (19) d'ordre j, le calcul étant fait pour que le nombre des résultats de mesure dépasse le nombre des paramètres à déterminer sur la base des mesures de modulation et donne un système d'équation aussi indépendant que possible.

3. Procédé selon les revendications 1 ou 2, caractérisé par

(d-1-1) le calcul sur un élément d'arête (21) paramétré par la pente m et le segment d'axe b en y dans le plan x-y de l'installation de modulation 3D (12) selon $y = mx+b$.

4. Procédé selon l'une quelconque des revendications 1 à 3, caractérisé par

l'utilisation simultanée de l'élément de détecteur (19) d'ordre j avec les éléments de détecteur voisins (19).

5. Procédé selon l'une quelconque des revendications 2 à 4, caractérisé en ce qu'

on utilise des éléments de filtre (18).

6. Procédé selon la revendication 1, caractérisé par les étapes suivantes :

(b-1) modulation spécifique au lieu par une installation de modulation 3D (12) sous la forme d'une installation de déviation spécifique au lieu et comprenant des éléments de déviation (23) et le cas échéant pour moduler l'intensité, la longueur d'onde, la polarisation et la fréquence de modulation de rayons électromagnétiques situés dans ou à proximité du plan de focalisation du système à diaphragme d'ouverture et lentilles (10) ;

(d-1) on calcule le point d'origine (14) d'un rayon électromagnétique considéré dans l'installation de modulation 3D (12) à l'aide des signaux détectés dans les éléments de détecteur (19) et des intervalles d'espace et/ou de temps qui en résultent dans la suite des images focalisées par le système à diaphragme d'ouverture et lentilles (10) et/ou des paramètres objets dans l'espace et/ou dans le temps.

7. Procédé selon la revendication 1, caractérisé par les étapes suivantes :

(b-1) modulation spécifique au lieu des rayons électromagnétiques par une installation de modulation en 3D (12) sous la forme d'un réseau de diffraction 3D cintré dans ou à proximité du plan de focalisation du système à diaphragme d'ouverture et lentilles (10), les rayons diffractés étant orientés selon la réflexion sur le plan incliné du réseau de diffraction 3D cintré, et/ou modulés en intensité suivant les conditions d'ouverture du réseau, et/ou en fonction de la relation de Bragg par une modulation de longueurs d'ondes, et/ou polarisés en fonction des anisotropies du réseau de diffraction, et/ou modulés dans le temps par une oscillation dans le temps, le cintrage spécifique au lieu et les autres propriétés du réseau de diffraction étant suffisamment diversifiés du point de vue de la modulation spécifique au lieu pour résoudre le système d'équations de la mise en oeuvre de l'étape d) ;

(d-1) calcul du point d'origine (14) d'un rayon électromagnétique considéré dans l'installation de modulation 3D (12) à l'aide des signaux résidant dans les éléments de détecteur (19) et des intervalles résultant d'espace et/ou de temps dans les suites d'images focalisées du système à diaphragme d'ouverture et lentilles (10) et/ou des paramètres objets dans l'espace et/ou le temps.

8. Procédé selon l'une quelconque des revendications 1, 6 ou 7, caractérisé par les étapes de procédé suivantes :

(c') on distingue les rayons électromagnétique incidents dans un élément de détecteur (19) en rayon d'ordre de diffraction O (24, 25) et en rayon d'ordre de diffraction supérieur (26, 27) à l'aide des longueurs d'ondes spécifiques des rayons électromagnétiques diffractés selon la relation de Bragg et/ou à l'aide d'éléments de détecteur spécifiques à une direction ;

(d') on calcule le point d'origine (14) d'un rayon électromagnétique considéré dans l'installation de modulation 3D à l'aide des signaux saisis dans les éléments de détecteur (19) et des intervalles d'espace et/ou de temps qui en résultent dans les suites d'images focalisées par le système à diaphragme d'ouverture et lentilles (10) et/ou des paramètres d'objets dans l'espace et/ou le temps.

**9.** Procédé selon l'une quelconque des revendications 1, 6, 7, 8,
caractérisé par les étapes suivantes :

(c") application d'un filtre passe-haut de temps, aux signaux saisis par un élément de détecteur (19), les fréquences traversant le filtre étant réglées de manière adaptative pour saisir la vitesse latérale augmentée de manière significative dans les suites d'images produites correspondant aux ordres de diffraction élevés, et pour répartir ainsi les rayons électromagnétiques tombant dans un élément de détecteur (19) en rayons non déviés (24, 25) ou provenant d'un ordre de diffraction O, et en rayons déviés (26, 27) ou correspondant à un ordre de diffraction élevé ;
(d") calcul du point d'origine (14) d'un rayon électromagnétique considéré dans l'installation de modulation 3D (12) à l'aide des signaux saisis dans les éléments de détecteur (19), et des intervalles d'espace et/ou de temps qui en résultent dans les suites d'images focalisées par le système à diaphragme d'ouverture et lentilles (10), et/ou des paramètres objets de l'espace et/ou du temps.

**10.** Procédé selon la revendication 1,
caractérisé par

(b-1) une modulation spécifique au lieu pour les rayons électromagnétiques par une installation de modulation 3D (12) sous la forme d'un réseau de diffraction 3D non cintré situé dans ou à proximité du plan de focalisation du système à diaphragme d'ouverture et lentilles (10), les rayons diffractés étant orientés suivant leur réflexion dans les plans de réseau inclinés du réseau de diffraction 3D non cintré et/ou modulés en intensité en fonction des conditions d'ouverture de réseau et/ou modulés en longueur d'onde selon la relation de Bragg, et/ou polarisés suivant les anisotropies du réseau de diffraction et/ou modulés dans le temps par l'application d'une oscillation de temps, les propriétés du réseau de diffraction étant suffisamment diversifiées pour permettre la résolution de système d'équations pour la mise en oeuvre de l'étape d) ;
(d-1) calcul du point d'origine (14) d'un rayon électromagnétique considéré dans l'installation de modulation 3D (12) à l'aide des signaux saisis dans les éléments de détecteur (19) et des distances d'espace et/ou de temps qui en résultent dans les suites d'images focalisées par le système à diaphragme d'ouverture et lentilles (10) et/ou des paramètres d'objets d'espace et/ou de temps.

**11.** Procédé selon l'une quelconque des revendications 7 à 10,
caractérisé par
l'exécution des étapes c) et d) dans le champ éloigné de Fraunhofer.

**12.** Procédé selon l'une quelconque des revendications 7 à 11,
caractérisé en ce qu'
on effectue les étapes c) et d) dans les plans de Talbot ou de Fresnel, dans le champ proche et aussi dans d'autres zones derrière un réseau de diffraction 3D.

**13.** Procédé selon la revendication 12,
caractérisé par les étapes suivantes :

- on enregistre la position de profondeur du foyer dans le plan de Talbot et/ou le plan de Fresnel dans le champ proche et aussi dans d'autres zones derrière un réseau de diffraction 3D à l'aide d'un élément de détecteur (19) sensible à la profondeur,
- on calcule la différence entre deux éloignements voisins d'objets (30).

**14.** Procédé selon l'une quelconque des revendications 1 à 13,
caractérisé par les étapes suivantes :

(a'-1) on détermine préalablement les caractéristiques 3D marquantes ou des modèles sous la forme d'éléments image avec un élément image de position remarquable comme origine d'un système de coordonnées locales pour chaque modèle ou pour chaque caractéristique 3D ;
(a'-2) on effectue une phase dite d'apprentissage selon laquelle chaque caractéristique 3D est mise dans chaque position 3D et dans chaque orientation 3D, ou chaque modèle est mis dans chaque position et orientation,
puis on détermine l'élément de détecteur (19) (j) sur lequel on projette l'élément d'image de position, ensuite, on définit le modèle de signal correspondant y compris le modèle de signal de démodulation pour les éléments de détecteur (19) dans l'environnement de l'élément de détecteur (19) d'ordre j,
et ensuite, on enregistre dans un réseau neuronal associatif, l'association de l'élément de détecteur (19) d'ordre j avec le modèle de signal des éléments de détecteur (19) environnants par rapport au modèle, c'est-à-dire la caractéristique 3D, la position de l'élément d'image de position et l'orientation,

(a'-3) on applique l'association apprise et mémorisée de l'élément de détecteur (19) d'ordre j, avec le modèle de signal des éléments de détecteur environnants (19), c'est-à-dire la caractéristique de modèle 3D, la position de l'élément d'image de position et d'orientation, à l'aide d'un réseau neuronal associatif.

15. Procédé selon la revendication 14,
caractérisé par
l'application de modèles sous la forme d'éléments images reposant sur des modèles d'intensité dans le plan focal du système à diaphragme d'ouverture et lentilles (10) et/ou sur des modèles de mouvement, et/ou sur des modèles de fréquence et/ou des modèles de couleur et de longueur d'onde, et/ou sur des modèles de polarisation et/ou des maxima d'intensité et/ou sur des formes tridimensionnelles 3D.

16. Procédé selon l'une quelconque des revendications 14 ou 15,
caractérisé par
l'application de réseaux neuronaux, qui s'informent à l'aide de la règle Hopfield ou d'une règle de perception et d'apprentissage ou encore d'une règle de propagation en retour et d'apprentissage, qui contiennent des couplages entre deux neurones et/ou des couplages entre trois neurones et/ou des couplages entre quatre neurones et/ou des couplages entre un nombre maximum de neurones, adapté à la complexité du modèle du signal, et qui pour des missions d'apprentissage compliquées comprennent un algorithme de perception et d'apprentissage avec des couplages d'un nombre maximum de neurones adapté à la complexité du modèle du signal, pour garantir la solution d'une preuve de convergence correspondant à la mission d'apprentissage.

17. Procédé selon l'une quelconque des revendications 14 à 16,
caractérisé par
(a'-2-1) la mise en mémoire de l'association par une mémoire électronique ou optique.

18. Procédé selon l'une quelconque des revendications 1 à 17,
caractérisé par
l'exécution des étapes de calcul et/ou des réseaux neuronaux avant ou après le plan de détecteur par une construction optique de corrélation.

19. Dispositif pour la mise en oeuvre partielle du procédé selon l'une quelconque des revendications 1 à 18, avec un système à diaphragme d'ouverture et lentilles (10) pour donner l'image d'une scène, et avec une installation de détection (13) placée derrière le système (10),
caractérisé par
une installation de modulation 3D (12) pour la modulation spécifique au lieu de la direction de développement et/ou l'intensité et/ou la longueur d'onde et/ou la polarisation et/ou la fréquence de modulation des rayons électromagnétiques, installation située derrière le système à diaphragme d'ouverture et lentilles (10) dans ou au voisinage du plan focal du système à diaphragme d'ouverture et lentilles (10), l'installation de détection (13) étant placée derrière l'installation de modulation 3D (12) pour saisir les rayons électromagnétiques modulés.

20. Dispositif selon la revendication 19,
caractérisé en ce que
l'installation de modulation 3D (12) comprend un réseau de diffraction 3D cintré, qui transforme les rayons électromagnétiques incidents en rayons électromagnétiques diffractés, les rayons diffractés étant orientés suivant la réflexion sur les plans de réseaux inclinés du réseau de diffraction 3D cintré, et/ou modulés en intensité suivant les conditions d'ouverture du réseau, et/ou modulés en longueur d'onde suivant la relation de Bragg, et/ou polarisés suivant les anisotropies du réseau de diffraction, et/ou modulés dans le temps par une oscillation de temps éventuellement induite.

21. Dispositif selon la revendication 19,
caractérisé en ce que
l'installation de modulation 3D (12) comprend un réseau de diffraction 3D non cintré, les rayons diffractés étant orientés suivant la réflexion sur les plans de réseaux inclinés du réseau de diffraction 3D non cintré, et/ou modulés en intensité suivant les conditions d'ouverture de réseau et/ou modulés en longueur d'onde suivant la relation de Bragg, et/ou polarisés en fonction des anisotropies du réseau de diffraction et/ou modulés dans le temps par une oscillation de temps éventuellement induite.

22. Dispositif selon l'une quelconque des revendications 20 ou 21,
caractérisé en ce que
le réseau de diffraction 3D comprend plusieurs couches de réseaux 3D.

23. Dispositif selon l'une quelconque des revendications 20 à 22,
caractérisé en ce que
dans le chemin du rayon optique image, en plus du réseau de diffraction 3D on a d'autres réseaux modifiant le degré de cohérence et/ou l'état de polarisation et/ou l'état de phase.

24. Dispositif selon l'une quelconque des revendications 19 à 23,
caractérisé en ce que
l'installation de détection (13) comporte un réseau CCD et/ou un réseau CID.

25. Dispositif selon l'une quelconque des revendications 19 à 24,
caractérisé en ce que
les éléments de détecteur (19) comportent des guides d'onde.

26. Dispositif selon l'une quelconque des revendications 19 à 25,
caractérisé en ce que
le système à diaphragme d'ouverture et lentilles (10), l'installation de détection (13) et l'installation de modulation 3D (12) sont conçus pour des ondes électromagnétiques, y compris les rayons X en dehors de la lumière visible.

27. Dispositif selon l'une quelconque des revendications 19 à 26,
caractérisé par
une oscillation de fréquence porteuse appliquée à l'installation de modulation 3D (12) et/ou à l'installation de détection (13).

28. Dispositif selon l'une quelconque des revendications 19 à 27,
caractérisé par
un réseau neuronal.

Fig.1

## Fig. 2

Fig.3

EP 0 866 943 B1

## Fig. 4

## Fig. 5a

## Fig.5b

Fig. 6

Fig. 7

Fourier-Transformation
mit Hilfe des volumenholographischen Elements

## Fig. 8

Fig.9

## Fig. 10

Fig.11

Fig. 12

Fig.13

Fig.14

Fig.15

Fig.16

Fig.17

Fig. 18

## Fig.19

## Fig.20

## Fig.21